(19) Europäisches Patentamt
European Patent Office
Office européen des brevets

(11) **EP 2 704 080 A1**

(12) **EUROPEAN PATENT APPLICATION**

(43) Date of publication:
**05.03.2014 Bulletin 2014/10**

(51) Int Cl.:
***G06Q 30/00*** *(2012.01)*

(21) Application number: **13194508.1**

(22) Date of filing: **24.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **25.05.2007 US 807191**
**25.05.2007 US 807218**
**31.10.2007 US 981648**

(62) Document number(s) of the earlier application(s) in accordance with Art. 76 EPC:
**08743225.8 / 2 188 712**

(71) Applicant: **KIT Digital Inc.**
**New York, NY 1011 (US)**

(72) Inventors:
• **Kanigsberg, Issar Amit**
**Aurora, Ontario L4G 6L4 (CA)**

• **Veidlinger, Daniel M**
**San Francisco, CA California 94115 (US)**
• **Mozersky, Myer J**
**Kingston, Ontario K7K 7E2 (CA)**
• **Shazli, Tamer El**
**Oakville, Ontario L6L 0A7 (CA)**

(74) Representative: **Driver, Virginia Rozanne**
**Page White & Farrer**
**Bedford House**
**John Street**
**London WC1N 2BF (GB)**

Remarks:
This application was filed on 26-11-2013 as a divisional application to the application mentioned under INID code 62.

(54) **Recommendation systems and methods**

(57) A search technology generates recommendations with minimal user data and participation, and provides better interpretation of user data, such as popularity, thus obtaining breadth and quality in recommendations. It is sensitive to the semantic content of natural language terms taken from user profiles at social networking and online dating applications and blogs. The profiles and blogs can include interests, eccentricities, age, gender, and location information associated with the user. The interest information can include music, movies, sports and personality traits. Based on the user's profile information, the system determines which ad from a stock of ads is best suited to a given profile and delivers that ad. The system can enable advertisers to create and manage online advertising campaigns using a campaign manager in which they attach descriptions to ads in their inventory, thereby generating a profile for each ad which is then compared to the profiles in the target online environment. A user interface can be provided to enable the user to fine-tune product and service recommendation results. The system can be used to match user profiles to provide mate-matching in an online dating environment. The system can be used to provide gift recommendations.

FIG. 3A

EP 2 704 080 A1

**Description**

RELATED APPLICATIONS

This application claims priority to United States Patent Application No. 11/807,191, filed on May 25, 2007. This application also claims priority to United States Application No. 11/807,218, filed on May 25, 2007. This application further claims priority to United States Application No. 11/981,648, filed on October 31, 2007. The entire teachings of the above referenced applications are incorporated by reference.

BACKGROUND

At times, it can be difficult for an online user to shop for products or find an appropriate product or service online. This is especially true when the user does not know exactly what he or she is looking for. Consumers, for example, expect to be able to input minimal information as search criteria and, in response, get specific, targeted and relevant information. The ability to consistently match a product or service to a consumer's request for a recommendation is a very valuable tool, as it can result in a high volume of sales for a particular product or company. Unfortunately, effectively accommodating these demands using existing search and recommendation technologies requires substantial time and resources, which are not easily captured into a search engine or recommendation system. The difficulties of this process are compounded by the unique challenges that online stores and advertisers face to make products and services known to consumers in this dynamic online environment.

Recommendation technology exists that attempts to predict items, such as movies, music and books that a user may be interested in, usually based on some information about the user's profile. Often, this is implemented as a collaborative filtering algorithm. Collaborative filtering algorithms typically analyze the user's past behavior in conjunction with the other users of the system. Ratings for products are collected from all users forming a collaborative set of related "interests" (e.g., "users that liked this item, have also like this other one"). In addition, a user's personal set of ratings allows for statistical comparison to a collaborative set and the formation of suggestions. Collaborative filtering is the recommendation system technology that is most common in current e-commerce systems. It is used in several vendor applications and online stores, such as Amazon.com.

Unfortunately, recommendation systems that use collaborative filtering are dependent on quality ratings, which are difficult to obtain because only a small set of users of the e-commerce system take the time to accurately rate products. Further, click-stream and buying behavior as ratings are often not connected to interests because the user navigation pattern through the e-commerce portal will not always be a precise indication of the user buying preferences. Additionally, a critical mass is difficult to achieve because collaborative rating relies on a large number of users for meaningful results, and achieving a critical mass limits the usefulness and applicability of these systems to a few vendors. Moreover, new users and new items require time to build history, and the statistical comparison of items relies on user ratings of previous selections. Furthermore, there is limited exposure of the "long tail," such that the limitation on the growth of human-generated ratings limits the number of products that can be offered and have their popularity measured.

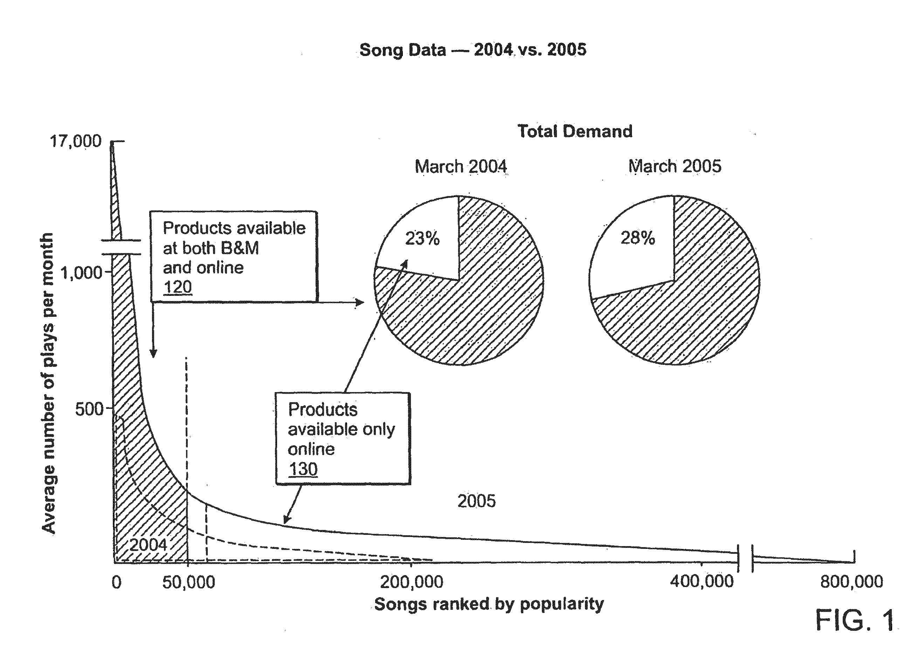

The long tail is a common representation of measurements of past consumer behavior. The theory of the long tail is that economy is increasingly shifting away from a focus on a relatively small number of "hits" (e.g., mainstream products and markets) at the head of the demand curve and toward a huge number of niches in the tail. FIG. 1 is a graph illustrating an example of the long tail phenomenon showing the measurement of past demand for songs, which are ranked by popularity on the horizontal axis. As illustrated in FIG. 1, the most popular songs 120 are made available at brick-and-mortar (B&M) stores and online while the least popular songs 130 are made available only online.

To compound problems, most traditional e-commerce systems make overspecialized recommendations. For instance, if the system has determined the user's preference for books, the system will not be capable of determining the user's preference for songs without obtaining additional data and having a profile extended, thereby constraining the recommendation capability of the system to just a few types of products and services.

There are rule-based recommendation systems that rely on user input and a set of pre-determined rules which are processed to generate output recommendations to users. A web portal, for example, gathers input to the recommendation system that focuses on user profile information (e.g., basic demographics and expressed category interests). The user input feeds into an inference engine that will use the pre-determined rules to generate recommendations that are output to the user. This is one simple form of recommendation systems, and it is typically found in direct marketing practices and vendor applications.

However, it is limited in that it requires a significant amount of work to manage rules and offers (e.g., the administrative overhead to maintain and expand the set of rules can be considerably large for e-commerce systems). Further, there is a limited number of pre-determined rules (e.g., the system is only as effective as its set of rules). Moreover, it is not scalable to large and dynamic e-commerce systems. Finally, there is limited exposure of the long tail (e.g., the limitation on the growth of a human-generated set of inference rules limits the number of products that can be offered and have their popularity measured).

Content-based recommendation systems exist that analyze content of past user selections to make new suggestions that are similar to the ones previously selected (e.g., "if you liked that article, you will also like this one"). This technology is based on the analysis of keywords present in the text to create a profile for each of the documents. Once the user rates one particular document, the system will understand that the user is interested in articles that have a similar profile. The recommendation is created by statistically relating the user interests to the other articles present in a set. Content-based systems have limited applicability, as they rely on a history being built from the user's previous accesses and interests. They are typically used in enterprise discovery systems and in news article suggestions.

In general, content-based recommendation systems are limited because they suffer from low degrees of effectiveness when applied beyond text documents because the analysis performed relies on a set of keywords extracted from textual content. Further, the system yields overspecialized recommendations as it builds an overspecialized profile based on history. If, for example, a user has a user profile for technology articles, the system will be unable to make recommendations that are disconnected from this area (e.g., poetry). Further, new users require time to build history because the statistical comparison of documents relies on user ratings of previous selections.

SUMMARY

In today's dynamic online environment, the critical nature of speed and accuracy in information retrieval can mean the difference between success and failure for a new product or service, or even a new company. Consumers want easy and quick access to specific, targeted and relevant recommendations. The current information gathering and retrieval schemes are unable to efficiently provide a user with such targeted information.

Thus, one of the most complicated aspects of developing an information gathering and retrieval model is finding a scheme in which the cost-benefit analysis accommodates all participants, i.e., the users, the online stores, and the developers (e.g., search engine providers). The currently available schemes do not provide a user-friendly, developer-friendly and financially-effective solution to provide easy and quick access to quality recommendations.

Computer implemented systems and methods for providing targeted online advertising are provided by the present invention. A plurality of user social networking profiles are processed to identify coincident keywords. A subject user social networking profile is processed to extract one or more keywords. The subject user profile is associated with a user using a social network. The keywords extracted from the subject user profile are expanded with additional interest related terms. The expanded interest terms are determined using one or more the coincident keywords identified from the plurality of user profiles. An ad is selected from an ad inventory to appear in connection with a page that the user is accessing from within the social network. The selected ad is determined using the expanded interest terms for the subject user profile.

Coincident keywords (co-occurring terms or keywords) in the plurality of user profiles can be identified by computing the frequency with which a keyword appears in conjunction with another keyword in one or more of the plurality of user profiles. The degree to which the two keywords tend to occur together is computed. A ratio indicating the frequency with which the two keywords appear together is determined. A correlation index indicating the likelihood that users interested in one of the keywords will be interested in the other keyword, as compared to an average user profile, is also determined. The computed degree, the determined ratio, and the determined correlation index are used to determine a percentage of co-occurrence for each of the keywords. The percentage of co-occurrence is used to determine a correlation ratio indicating how often a co-occurring keyword is present when another co-occurring keyword is present.

The expanded interest terms for the subject user profile can be determined by weighing the importance of a keyword extracted from the subject user profile. The importance of the extracted keyword can increase proportionally to the number of times the extracted keyword appears in the subject user profile. This can be offset by the frequency it appears as a coincident keyword in the plurality of user profiles. A term frequency-inverse document frequency (idf) weighting calculation can be used to determine the value of the extracted keyword as an indication of user interest.

In this way, the extracted keyword from the subject user profile and the coincident keywords can be treated as nodes in an interconnected system. The weights between nodes correspond to the strength of a statistical relation between the one or more extracted keywords and the coincident keywords.

When determining additional keywords to use to create the expanded interest terms for the subject user profile, one or more keywords from a blog on the social network can be used, where the blog is associated with the user. The frequency with which the one or more extracted keywords from the blog appears in conjunction with a coincident keyword from the plurality of user profiles is determined. These keywords from the blog that frequently appear together in the corpus of user profiles can also be used to create the expanded interest terms.

In building data models of coincident keywords, preferably, millions of profiles are analyzed to identify coincident keywords or terms, e.g. terms that appear together in one or more profiles. The coincident keywords/terms are used to build data models. In analyzing profiles to identify the coincident terms, keywords are extracted using comma delimiters and natural language processing with custom-built dictionaries. The keywords are analyzed to produce the expanded interest terms (a set of interests related to any word). By using a combination of the probabilistic method, nodal method and concept specific ontology, such expanded interest terms can determined.

Ad profiles can be created to facilitate the ad selection process. One or more keywords from a candidate ad can be extracted. The frequency with which the one or more extracted keywords from the ad appear in conjunction with a coincident keyword from the plurality of user profiles can be computed. The extracted ad keywords from the ad can be expanded with additional interest related terms using one or more of the coincident keywords identified from the plurality of user profiles. The expanded ad related interest terms can be used to build an ad profile (data model). The expanded ad related interest terms in the ad profile can be compared with the expanded interest terms of the subject user profile to determine which ad to select from the ad inventory. When comparing the expanded ad related interest terms in the ad profile with the expanded interest terms of the subject user profile, no exact match of respective interest related terms is required.

The ad inventory stores candidate ads to be served by an ad server. The ad server can cause, for example, the selected ad to appear in a pop-up window on the user's computer interface, or to appear as ad space in a portion of a page that the user is accessing on the social network. The social network can be any social networking site or application. For example, the social network can be FACEBOOK, MYSPACE, FRIENDSTER, or MATCH.COM.

When identifying the co-occurnng keywords from the user profiles, the frequency with which a keyword appears in conjunction with another keyword is computed in the overall defined population. The degree to which the two keywords tend to occur together can be computed. A ratio indicating the frequency with which the two keywords occur together is determined. A correlation index indicating the likelihood that users interested in one of the keywords will also be interested in the other keyword, is determined. The computed degree, the determined ratio and the correlation index can be processed to determine a percentage of co-occurrence for each keyword. The percentage of co-occurrence for each keyword is used to determine a correlation ratio, which indicates how often a co-occurring keyword is present when another co-occurring keyword is present, as compared to how often it occurs on its own. This information is used in processing keywords in queries to identify matching keywords. The matching keywords can be used to search products, services or Internet sites to generate recommendations.

The user profiles can be processed to extract keywords using a web crawler. User profiles, such as personal profiles on myspace.com or friendster.com on the Internet can be analyzed. Keywords can be extracted from the analyzed user profiles.

Term frequency--inverse-document frequency (tf-idf) weighing measures can be used to determine how important an identified keyword is to a subject user profile in a collection or corpus of profiles. The importance of the identified keyword can increase proportionally to the number of times it appears in the document, offset by the frequency the identified keyword occurs in the corpus. The tf-idf calculation can be used to determine the weight of the identified keyword (or node) based on its frequency, and it can be used for filtering in/out other identified keywords based on their overall frequency. The tf-idf scoring can be used to determine the value of the identified keyword as an indication of user interest. The tf-idf scoring can employ the topic vector space model (TVSM) to produce relevancy vector space of related keywords/interests.

Each identified keyword can be used to generate output nodes and super nodes. The output nodes are normally distributed close nodes around each token of the original query. The super nodes act as classifiers identified by deduction of their overall frequency in the corpus. A super node, for example, would be "rock music" or "hair bands." However, if the idf value of an identified keyword is below zero, then it is determined not to be a super node. A keyword like "music," for example is not considered a super node (classifier) because its idf value is below zero, in that it is too popular or broad to yield any indication of user interest.

As discussed, basic probability, tf-idf, nodes, and concept specific ontology approaches can be used to determine coincident (co-occurring) keywords and terms. It should be noted, however, that any combination of the these methods can be used to determine coincident (co-occurring) keywords and terms.

A computer program product can be provided for managing online ad campaigns. Executable software code on a computer useable medium is used to create and manage the online advertising campaigns. Profiles can be associated with ads in an ad inventory. A social networking profile of a user who uses a social networking application can be accessed and processed. The social networking profile can be compared with one or more of the ad profiles. An ad from the ad inventory can be selected for use in connection with the user's use of the social networking application. The ad inventory includes ads that are stored on an ad server. Ads in the ad inventory are queued as candidates to be targeted to the user.

A computer implemented method for recommending products and services can be provided. The method can enable a user to use the user interface to tune search results from a recommendation system. Interest input from the user can be received by the recommendation system. Interest-related categories of products or services to recommend to the user are determined based on the user interest input. The search results of the interest-related category recommendations are displayed. Each interest-related category recommendation is displayed with an associated slider bar.

The user can use the slider bar to adjust the relevancy score of a respective interest-related category recommendation. The system can respond to the slider bar adjustment by recalculating the relevancy score of that respective interest-related category recommendation. The interest-related category recommendations can then be updated and redisplayed. The initial position of the slider bar represents the degree of the relevancy score. The relevancy score represents a normalized relevancy weight. The slider bar is used by the user to refine the recommendations made, where the recommendations are made based at least in part on data models, which are generated from coincident keywords that frequently appear in a corpus of user profiles. The user profiles can be from, for example, a social networking or online dating user site.

A computer implemented method of providing targeted profile matching in an online dating network can be provided. User profiles of matched couples from an online dating network to extract keywords are processed and used to create data models. The matched couples can be couples that are already dating. Keywords that commonly occur in the user online dating profiles of the matched couples are identified. The identified co-occurring keywords from the user profiles of the matched couples are ranked. The ranked identified co-occurring keywords of the matched couples are used to make mate recommendations for users seeking a romantic match by comparing the identified co-occurring keywords of the matched couples with co-identified keywords from profiles of the users seeking a romantic match.

According to another embodiment, computer implemented systems and methods for recommending products and services are provided. Concepts are stored and classified using an ontological classification system, which classifies concepts based on similarities among stored concepts. The ontological classification system enables fine grained searching.

An initial search query is requested by a user who is shopping online for a product or service recommendation. The initial search query can be expanded with additional search terms. The additional search terms are determined by correlating similarities between the initial search terms and one or more of the stored concepts. The search terms are analyzed. Concepts identified from the stored concepts that are conceptually related to the analyzed search terms can be suggested. At least a portion of the suggested concepts are used to expand the initial search query. When suggesting concepts, the system determines whether there are any keywords related to the stored concepts, which commonly appear in conjunction with the search terms.

The stored concepts can be associated with classes. The classes can be non-hierarchical and can include: objects, states, animates, or events.

The concepts are classified using a plurality of properties. Each of the properties have at least one property value. The properties are defined without any fixed relations between properties. Each property value has a corresponding weight coefficient. The weight coefficient is used in calculating the strength of that property value when correlating similar concepts. The weight ranges can be from 0 to 1, with 1 being a strong weight and 0 being a weak weight. Other weight ranges are suitable.

Referents between two or more of the concepts can be correlated. The referents can be correlated regardless of whether the two or more concepts have any classes in common. For example, two objects can be similar in various ways, but have very little in common in terms of the traditional classes under which they fall. The referents can be defined based on the properties that the two or more concepts share in common.

The initial search query may be a request for a gift recommendation, a trip recommendation, a trend forecast, music, a movie, a companion, a keyword associated with internet domains, or a keyword to be used for generating online links. The initial search query is received by a search engine and the additional search terms for expanding the initial search query are used to generate ads related to the initial search query.

A software system is provided for recommending products and services. Concepts are stored in a database. An ontological classification system is used to enable fine grained searches by enabling the correlation of similarities among the concepts stored in the database. A search handler receives an initial search query. An analysis engine interfaces with the search handler and the database. The engine expands the initial search query by determining additional keywords. The additional keywords are determined by correlating similarities between the initial search terms and one or more of the stored concepts.

According to another embodiment, computer implemented systems and methods for recommending products and services are provided by the present invention. Online information, such as user profiles, are processed to extract keywords. Multiple user profiles are correlated based on interests and product references in the profiles. Keywords, for example, that commonly appear together in user profiles can be identified. A search query is received from, for example, a search engine. The search query may be initiated by a user who is shopping online for a product or service. The search query may be a request for a gift recommendation or a trip recommendation. When the search query is processed, it is expanded with additional search terms related to the search query. The search query is expanded using one or more of the identified co-occurring keywords from the processed user profiles.

When identifying the co-occurring keywords from the user profiles, the frequency with which a keyword appears in conjunction with another keyword is computed in the overall defined population. The degree to which the two keywords tend to occur together can be computed. A ratio indicating the frequency with which the two keywords occur together is determined. A correlation index indicating the likelihood that users interested in one of the keywords will also be interested in the other keyword is determined. The computed degree, the determined ratio and the correlation index can be processed to determine a percentage of co-occurrence for each keyword. The percentage of co-occurrence for each keyword is used to determine a correlation ratio, which indicates how often a co-occurring keyword is present when another co-occurring keyword is present, as compared to how often it occurs on its own. This information is used in processing keywords in queries to identify matching keywords. The matching keywords can be used to search products, services or internet sites to generate recommendations.

The user profiles can be processed to extract keywords using a web crawler. User profiles, such as personal profiles on myspace.com or friendster.com on the Internet can be analyzed. Keywords can be extracted from the analyzed user profiles.

Term frequency--inverse-document frequency (tf-idf) weighing measures can be used to determine how important an identified keyword is to a subject profile in a collection or corpus of profiles. The importance of the identified keyword can increase proportionally to the number of times it appears in the document, offset by the frequency the identified keyword occurs in the corpus. The tf-idf calculation can be used to determine the weight of the identified keyword (or node) based on its frequency, and it can be used for filtering in/out other identified keywords based on their overall frequency. The tf-idf scoring can be used to determine the value of the identified keyword as an indication of user interest. The tf-idf scoring can employ the topic vector space model (TVSM) to produce relevancy vector space of related keywords/interests.

Each identified keyword can be used to generate an output node and a super node. The output nodes are normally distributed close nodes around each token of the original query. The super nodes act as classifiers identified by deduction of their overall frequency in the corpus. A super node, for example, would be "rock music" or "hair bands." However, if the idf value of an identified keyword is below zero, then it is determined not to be a super node. A keyword like "music," for example is not considered a super node (classifier) because its idf value is below zero, in that it is too popular or broad to yield any indication of user interest.

A software system is implemented for recommending products and services. The software system includes a web crawler that processes user profiles to extract keywords. A handler, in communication with the web crawler, receives keywords that have been identified as occurring together in the same user profiles. A recommendation engine can be provided to expand a given search query with additional search terms related to the search query, as determined by the correlation ratio. The additional search terms are determined using one or more of the identified co-occurring keywords.

BRIEF DESCRIPTION OF THE DRAWINGS

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.

FIG. 1 is a graph illustrating the Long Tail phenomenon, with products available at brick-and-mortar and online arms of a retailer.

FIG. 2A is a diagram illustrating an example method of gift recommendation according to an aspect of the present invention.

FIG. 2B is a diagram illustrating the relationship between interests and buying behavior.

FIG. 3A is a diagram of the recommendation system (Interest Analysis Engine) according to an aspect of the present invention.

FIG. 3B is a flow chart illustrating the keyword weighting analysis of the Interest Correlation Analyzer according to an embodiment of the present invention.

FIGS. 3C - 3D are screenshots of typical personal profile pages.

FIGS. 4A - 4B are tables illustrating search results according to an aspect of the present invention.

FIG. 5 is a diagram of the semantic map of the Concept Specific Ontology of the present invention.

FIGS. 6A and 6C are tables illustrating search results based on the Concept Specific Ontology according to an aspect of the present invention.

FIGS. 6B and 6D are tables illustrating search results based on prior art technologies.

FIG. 7 is a flow diagram of the method of the Concept Specific Ontology according to an aspect of the present invention.

FIGS. 8A - 8E are diagrams illustrating the Concept Input Form of the Concept Specific Ontology according to an aspect of the present invention.

FIG. 9 is a diagram illustrating the Settings page used to adjust the weighting of each property value of a concept of the Concept Specific Ontology according to an aspect of the present invention.

FIGS. 10A - 10B are flow charts illustrating combining results from the Interest Correlation Analyzer and Concept Specific Ontology through Iterative Classification Feedback according to an aspect of the present invention.

FIG. 11 is a diagram illustrating the connection of an external web service to the recommendation system (Interest Analysis Engine) according to an aspect of the present invention.

FIGS. 12A - 19A are diagrams illustrating example applications of the connection of external web services of FIG. 11 to the recommendation system (Interest Analysis Engine) according to an aspect of the present invention.

FIG. 19B is a block diagram depicting an ad system according to an embodiment of the present invention.

FIG. 19C is a screenshot of an example interface of an ad campaign manager 1920 according to an embodiment of the present invention.

FIG. 19D is a screenshot of a user interface for refining the results provided by the Interest Analysis Engine of the present invention.

FIG. 20 is a schematic illustration of a computer network or similar digital processing environment in which embodiments of the present invention may be implemented.

FIG. 21 is a block diagram of the internal structure of a computer of the network of FIG. 20.

DETAILED DESCRIPTION OF THE INVENTION

A description of example embodiments of the invention follows.

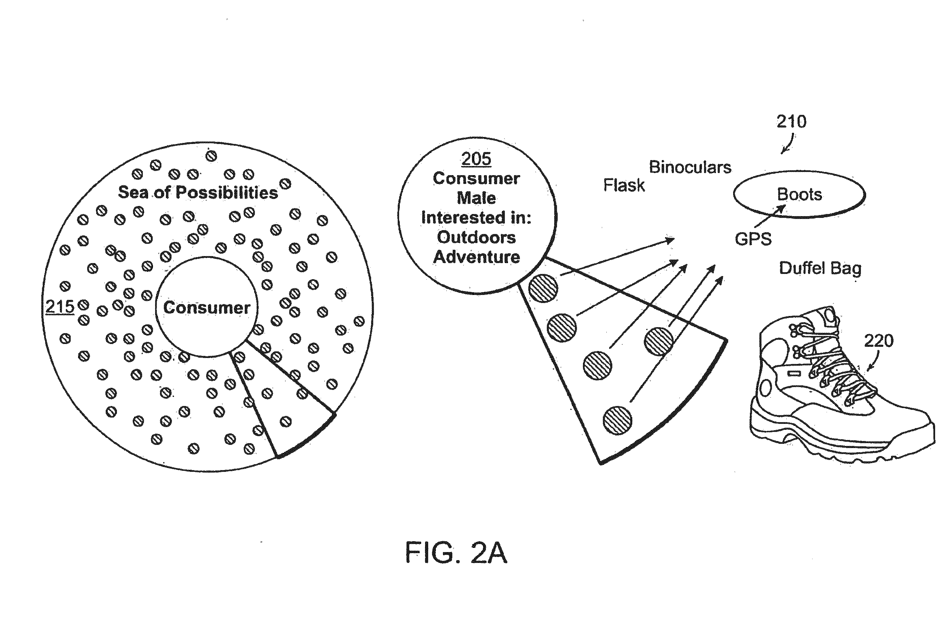

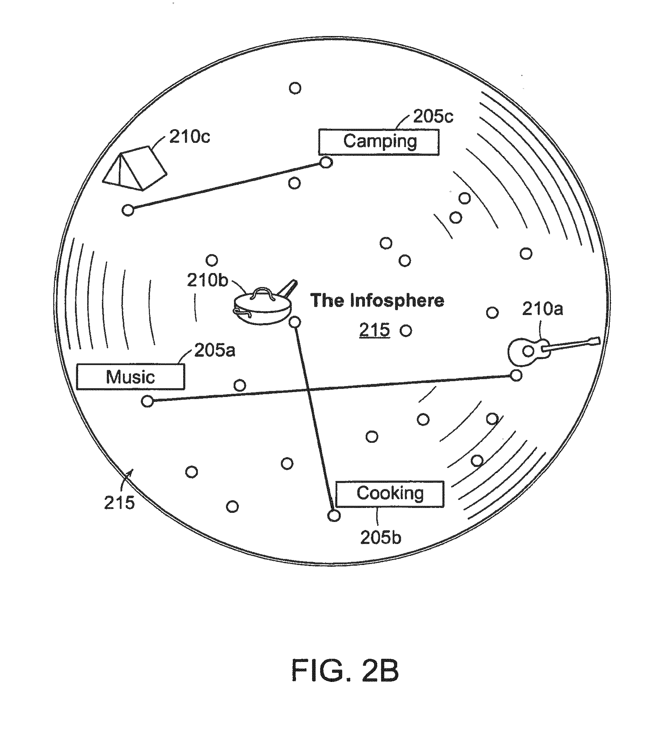

The search technology of the present invention is sensitive to the semantic content of words and lets the searcher briefly describe the intended recipient (e.g., interests, eccentricities, previously successful gifts). As illustrated in FIG. 2A, these terms 205 may be descriptors such as Male, Outdoors and Adventure. Based on that input 205, the recommendation software of the present invention may employ the meaning of the entered terms 205 to creatively discover connections to gift recommendations 210 from the vast array of possibilities 215, referred to herein as the infosphere. The user may then make a selection 220 from these recommendations 210. The engine allows the user to find gifts through connections that are not limited to information previously available on the Internet, connections that may be *implicit.* Thus, as illustrated in FIG. 2B, interests can be connected to buying behavior by relating terms 205a-205c to respective items 210a-210c.

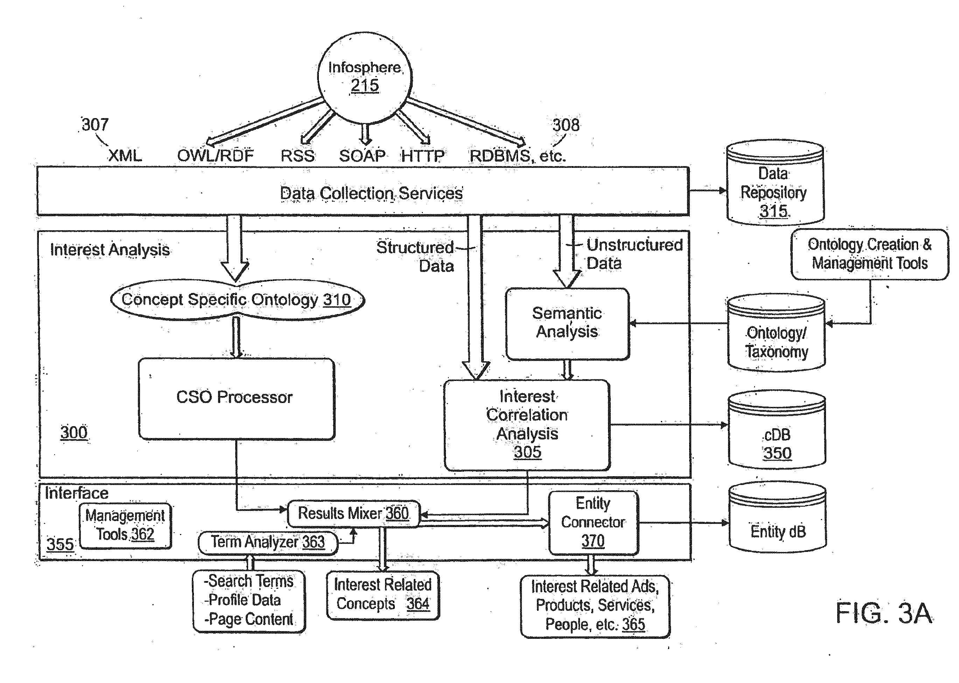

While taking advantage of the results provided by statistical methods of recommendation, example embodiments of the present invention perform an analysis of the meaning of user data to achieve better results. In support of this approach, the architecture of the recommendation system 300, which is also referred to herein as the Interest Analysis Engine (IAE), as illustrated in FIG. 3A, is centered on the combination of the results of two components. The first component is referred to herein as Interest Correlation Analysis (ICA) engine 305 and, in general, it is an algorithm that focuses on the statistical analysis of terms and their relationships that are found in multiple sources on the Internet (a global computer network). The second component is referred to herein as Concept Specific Ontology (CSO) 310 and, in general, it is an algorithm that focuses on the understanding of the meaning of user provided data.

Preferably, the recommendation system 300 includes a web-based interface that prompts a user to input a word or string of words, such as interests, age, religion or other words describing a person. These words are processed by the ICA engine 305 and/or the CSO 310 which returns a list of related words. These words include hobbies, sports, musical groups, movies, television shows, food and other events, processes, products and services that are likely to be of interest to the person described through the inputted words. The words and related user data are stored in the database 350 for example.

The ICA engine 305 suggests concepts that a person with certain given interests and characteristics would be interested in, based upon statistical analysis of millions of other people. In other words, the system 300 says "If you are interested in A, then, based upon statistical analysis of many other people who are also interested in A, you will probably also be interested in B, C and D."

In general, traditional search technologies simply fail their users because they are unable to take advantage of relations between concepts that are spelled differently but related by the properties of what they denote. The CSO processor 310 uses a database that builds in "closeness" relations based on these properties. Search algorithms then compare concepts in many ways returning more relevant results and filtering out those that are less relevant. This renders information more useful than ever before.

The search technology 300 of the present invention is non-hierarchical and surpasses existing search capabilities by placing each word in a fine-grained semantic space that captures the relations between concepts. Concepts in this dynamic, updateable database are related to every other concept. In particular, concepts are related on the basis of the properties of the objects they refer to, thereby capturing the most subtle relations between concepts. This allows the search technology 300 of the present invention to seek out concepts that are "close" to each other, either in general, or along one or more of the dimensions of comparison. The user, such as the administrator, may choose which dimension(s) is (are) most pertinent and search for concepts that are related along those lines.

In one preferred embodiment, the referent of any word can be described by its properties rather than using that word itself. This is the real content or "meaning" of the word. In principle, any word can be put into a semantic space that reflects its relationship to other words not through a hierarchy of sets, but rather through the degree of shared qualities between referents of the words. These related concepts are neither synonyms, homonyms, holonyms nor meronyms. They are nonetheless similar in various ways that CSO 310 is able to highlight. The search architecture of the present invention therefore allows the user to execute searches based on the deep structure of the meaning of the word.

As illustrated in FIG. 3A, the ICA engine 305 and the CSO 310 are complementary technologies that can work together to create the recommendation system 300 of the present invention. The statistical analysis of the ICA engine 305 of literal expressions of interest found in the infosphere 215 creates explicit connections across a vast pool of entities. The ontological analysis of CSO 310 creates conceptual connections between interests and can make novel discoveries through its search extension.

Interest Correlation Analyzer

The Internet, or infosphere 215, offers a massive pool of actual consumer interest patterns. The commercial relevance of these interests is that they are often connected to consumers' buying behavior. As part of the method to connect interests to products, this information can be extracted from the Internet, or the infosphere 215, by numerous protocols 307 and sources 308, and stored in a data repository 315. The challenge is to create a system that has the ability to retrieve and analyze millions of profiles and to correlate a huge number of words that may be on the order of hundreds of millions.

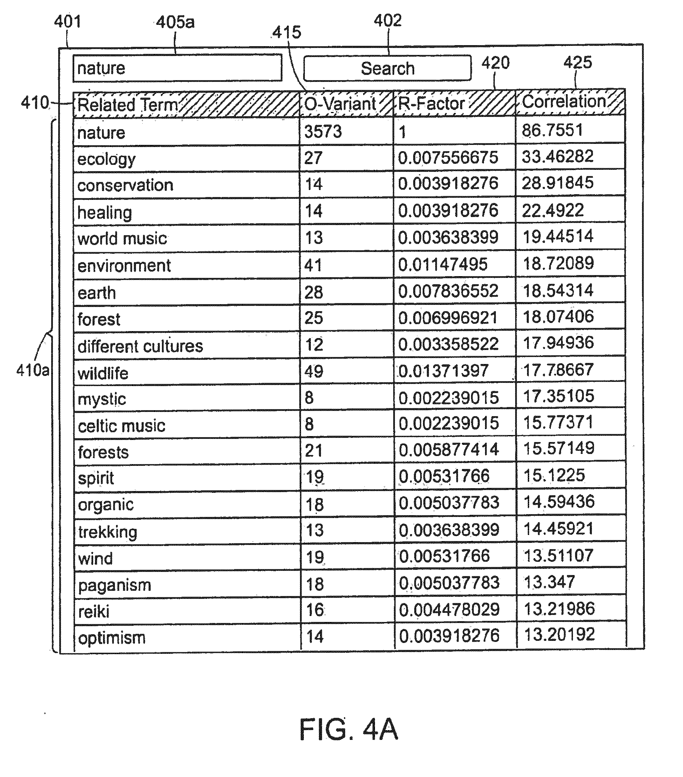

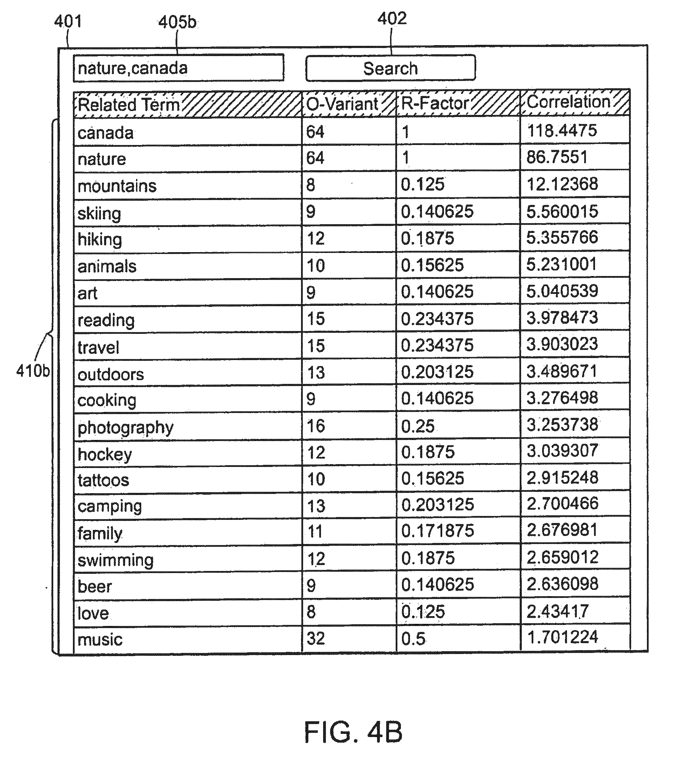

Referring to FIGs. 3A, 4A and 4B, the recommendation system 300 functions by extracting keywords 410a, b retrieved from the infosphere 215 and stored in the data repository 315. An example output of the ICA engine 305 is provided in the table in FIG. 4A. Search terms 405a processed through the ICA engine 305 return numerous keywords 410a that are accompanied by numbers 415 which represent the degree to which they tend to occur together in a large corpus of data culled from the infosphere 215. In the example, the search term 405a "nature" appears 3573 times in the infosphere 215 locations investigated. The statistical analysis also reveals that the word "ecology" appears 27 times in conjunction with the word "nature."

The R-Factor column 420 indicates the ratio between the frequency 415 of the two terms occur together and the frequency 415 of one term (i.e., 27 occurrences of "ecology" and "nature" divided by 3573 occurrences of "nature" = 0.007556675). The correlation index 425 indicates the likelihood that people interested in "nature" will also be interested in "ecology" (i.e., the strength of the relationship between the search term 405a and the keyword 410) compared to the average user. The calculation of this correlation factor 425 was determined through experimentation and further detail below. In this particular case, the analysis output by the algorithm indicates that people interested in "nature" will be approximately 33.46 times more likely to be interested in "ecology" than the average person in society.

There are two main stages involved in the construction and use of the ICA engine 305: database construction and population, and data processing.

How the ICA Works

The ICA engine 305 employs several methods of statistically analyzing keywords. For instance, term frequency-inverse document frequency (tf-idf) weighting measures how important a word is to a document in a collection or corpus, with the importance increasing proportionally to the number of times a word appears in the document offset by the frequency of the word in the corpus. The ICA engine 305 uses tf-idf to determine the weights of a word (or node) based on its frequency and is used primarily for filtering in/out keywords based on their overall frequency and the path frequency.

The ICA then, using the tf-idf scoring method, employs the topic vector space model (TVSM), as described in Becker, J. and Kuropka, D., "Topic-based Vector Space Model," Proceedings of BIS 2003, to produce relevancy vector space of related keywords/interests. The ICA also relies on the Shuffled Complex Evolution Algorithm, described in Y. Tang, P. Reed, and T. Wagener, "How effective and efficient are multiobjective evolutionary algorithms at hydrologic model calibration?," Hydrol. Earth Syst. Sci., 10, 289-307, 2006, J. Li , X. Li, C.M. Frayn, P. Tino and X. Yao, "Understanding and Predicting Dynamical Behaviours in Financial Markets: Financial Application Research in CERCIA," 10th Annual Workshop on Economic Heterogeneous Interacting Agents (WEHIA 2005), University of Essex, UK, June 2005, Phillip Jordan1, 2, Alan Seed3, Peter May3 and Tom Keenan3, "Evaluation of dual polarization radar for rainfall-runoff modelling: a case study in Sydney, Australia," Sixth International Symposium on Hydrological Applications of Weather Radar, 2004, Juan Liu Iba, H., Selecting Informative Genes Using a Multiobjective Evolutionary Algorithm, Proceedings of the 2002 Congress on Evolutionary Computation, 2002. All the above documents relating to tf-idf, TVSM and Shuffled Complex Evolution are incorporated herein by reference.

1 - Query

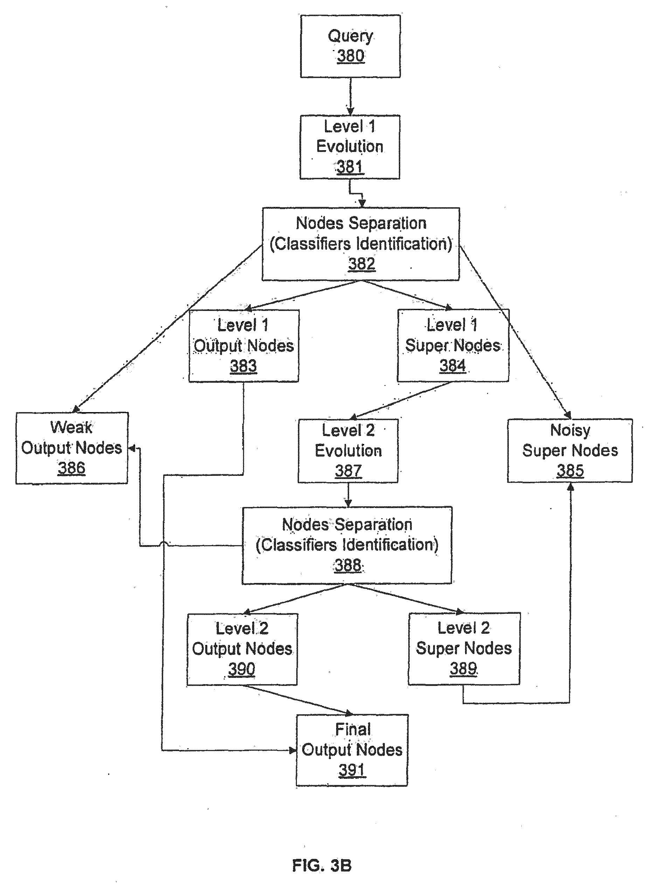

FIG. 3B is a flow chart illustrating the keyword weighting analysis of the ICA 305. First, an input query 380 is broken down into lexical segments (i.e., keywords) and any annotation or "dummy" keywords are discarded.

2 - Level 1 evolution

In the Level 1 evolution 381, each keyword is fed into the first evolution separator 382 to generate two sets of nodes: output nodes 383 and super nodes 384. These two types of nodes are produced by the Shuffled Complex Evolution Algorithm. The output nodes 383 are normally distributed close nodes around each token of the original query. The super nodes 384 act as classifiers identified by deduction of their overall frequency in the corpus. For example, let us assume a user likes the bands Nirvana, Guns 'n' Roses, Pearl Jam and The Strokes. These keywords are considered normal nodes. Other normal nodes the ICA would produce are, for example, "drums," "guitar," "song writing," "Pink Floyd," etc. A deducted super node 384, for example, would be "rock music" or "hair bands." However, a keyword like "music," for example, is not considered a super node 384 (classifier) because its idf value is below zero, meaning it is too popular or broad to yield any indication of user interest.

The algorithm uses tf-idf for the attenuation factor of each node. This factor identifies the noisy super nodes 385 as well as weak nodes 386. The set of super nodes 384 is one to two percent of the keywords in the corpus and is identified by their normalized scores given their idf value greater than zero. The idf values for the super nodes 384 are calculated using the mean value of the frequency in the corpus and an arbitrary sigma ($\sigma$) factor of six to ten. This generates a set of about five hundred super nodes 384 in a corpus of sixty thousand keywords.

In this stage, the ICA 305 also calculates the weight of the node according to the following formula:

$$W(Qi \rightarrow Nj) = RP(i \rightarrow j) / MeanPathWeight(i \rightarrow j) * idf$$

where:

Qi: query keyword (i)

Nj: related node

RP: Relative path weight (leads from Qi to Nj)

MeanPathWeight: the mean path weight between Qi and all nodes Nx.

Equation 1

Idf calculates according to the following formula:

$$Idf(Nj) = Log ( (M + k*STD)/Fj )$$

where:

M: mean frequency of the corpus

k: threshold of $\sigma$

STD: standard deviation ($\sigma$)

Fj: Frequency of the keyword Nj

Equation 2

For a keyword Qi, ICA 305 must determine all the nodes connected to Qi. For example, there may be one thousand nodes. Each node is connected to Qi with a weight (or frequency). This weight represents how many profiles (people) assumed Qi and the node simultaneously. The mean frequency, M, of Qi in the corpus of nodes is calculated. For each node Nj we calculate the weight of the path, RP, from Qi to Nj by dividing the frequency of Qi in Nj by M. The ICA 305 then calculates the cdf/erfc value of this node's frequency for sampling error correction.

Any node with a score less than zero (negative weight) is classified as classifier super node. The weight for the super nodes are then recalculated as follows:

$$WS(i \rightarrow j) = RP(i \rightarrow j) * cdf(i \rightarrow j)$$

where:

RP: relative path weight

cdf: cumulative distribution function of $Qi \rightarrow Nj$

erfc: error function (also called the Gauss error function).

*Equation 3*

The erfc error function is discussed in detail in Milton Abramowitz and Irene A. Stegun, eds. "Handbook of Mathematical Functions with Formulas, Graphs, and Mathematical Tables," New York: Dover, 1972 (Chapter 7), the teachings of which are incorporated herein by reference.

The weights of the output nodes 383 and the super nodes 384 are then normalized using z-score normalization, guaranteeing that all scores are between zero and one and are normally distributed. The mean (M) and standard deviation (STDV) of the output nodes 383 weights are calculated, with the weight for each node recalculated as follows:

$$W = X * \sigma - k * \sigma + \mu$$

where:

X: new weight

k: threshold of negligent

$\mu$: the mean (or average) of the relevancy frequency.

*Equation 4*

3 - Level 2 evolution

The Level 1 super nodes 384 are then fed (with their respective weights) into Level 2 evolution 387. After being fed through a second evolution separator 388, the Level 2 evolution super nodes 389 are then discarded as noisy super nodes 385. Separator 388 also discards some nodes as weak output nodes 386. Each output node's 390 weight is calculated the same way as above and multiplied by the weight of its relative Level 1 super node 384.

4 - Weight combination

This is repeated for each keyword and the combination of keywords to yield sets of nodes and super nodes. The final node set 391 is an addition process of the Level 1 output nodes 383 and the Level 2 output nodes 390.

Database Construction and Population

Referring back to FIG. 3A, the main architecture of the ICA engine 305 consists of a computerized database (such as Microsoft Access or SQL server enterprise edition) 350 that is organized into two tables.

Table 1 has three fields:

A = UserID
B = Keyword
C = Class

Table 2 has four fields which are populated after Table 1 has been filled:

A = Keyword
B = Class
C = Occurrence
D = Popularity

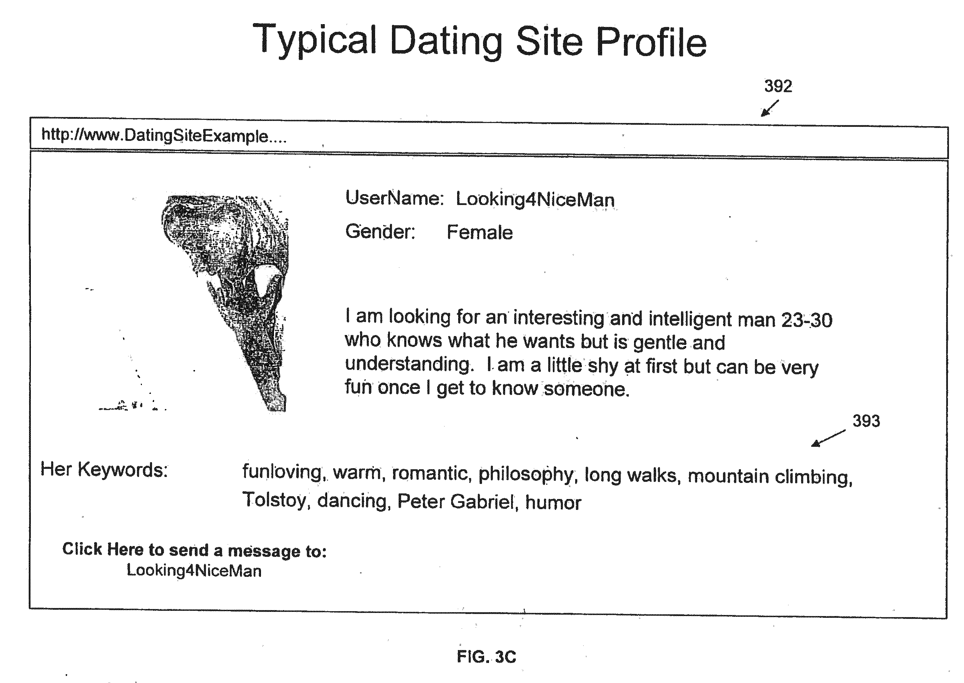

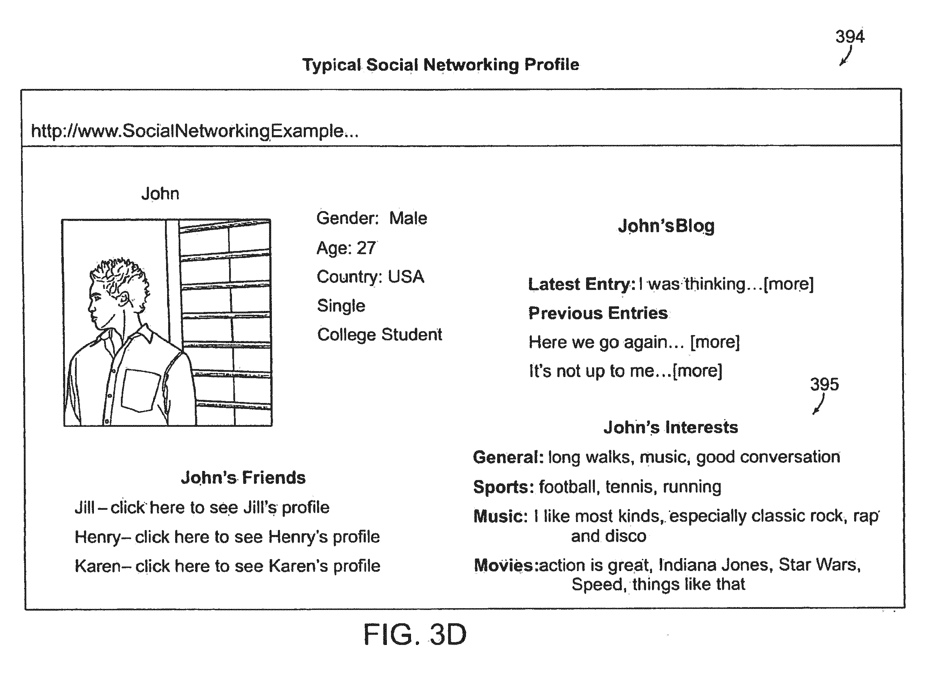

Table 1 is populated with keywords culled from the infosphere 215, such as personal profiles built by individual human users that may be on publicly available Internet sites. Millions of people have built personal websites hosted on hundreds of Dating Sites and "Social Networking" Sites. These personal websites often list the interests of the creator. Examples of such sites can be found at www.myspace.com, www.hotornot.com, www.friendster.com, www.facebook.com, and many other social networking websites that allow people to communicate with their friends, acquaintances or others and exchange information.. For example, FIG. 3C depicts a typical dating site profile 392 showing the keywords that are used in the correlation calculations 393. FIG. 3D depicts a typical social networking profile 394 including interests, music, movies, etc. that are used in the correlation calculations 395.

The ICA engine 305 uses commercially available web parsers 307 and scrapers to download the interests found on these sites in the infosphere 215 into Table 1, Field B. Each interest, or keyword Table 1, Field B, is associated with the UserID acquired from the source website in the infosphere 215, which is placed into Table 1, Field A. If possible, an associated Class is entered into Field C from the source website in the infosphere 215. One record in Table 1 therefore consists of a word or phrase (Keyword) in Field B, the UserID associated with that entry in Field A, and an associated Class, if possible, in Field C. Therefore, three parsed social networking profiles from the infosphere 215 placed in Table 1 might look like the following:

Table 1

| UserID | Keyword | Class |
|--------|---------|-------|
| 5477 | The Beatles | Music |
| 5477 | Painting | Hobby |
| 5477 | CSI | Television |
| 5477 | 24 | Age |
| 6833 | Sushi | Food |
| 6833 | Canada | Place |
| 6833 | Romance | Relationships |
| 6833 | In College | Education |
| 6833 | CSI | Television |
| 8445 | 24 | Television |
| 8445 | Reading | Hobby |

In a preferred embodiment, millions of such records will be created. The more records there are, the better the system will operate.

Once this process is determined to be complete, Table 2 (in database 350) is constructed in the following manner. An SQL query is used to isolate all of the unique keyword and class combinations in Table 1, and these are placed in Field A (Keyword) and Field B (Class) respectively in Table 2. Table 2, Field C (Occurrence) is then populated by using an SQL query that counts the frequency with which each Keyword and Class combination occurs in Table 1. In the above example, each record would score 1 except CSI/Television which would score 2 in Table 2, Field C.

Table 2, Field D (Popularity) is populated by dividing the number in Table 2, Field C by the total number of unique records in Table 1, Field A. Therefore in the above example, the denominator would be 3, so that Table 2, Field D represents the proportion of unique UserIDs that have the associated Keyword and Class combination. A score of 1 means that the Keyword is present in all UserIDs and 0.5 means it is present in half of the unique UserIDs (which represents individual profiles scraped from the Internet). Therefore, Table 2 for the three parsed social networking profiles placed in Table 1 might look like the following:

Table 2

| Keyword | Class | Occurrence | Popularity |
|---|---|---|---|
| The Beatles | Music | 1 | 0.33333 |
| Painting | Hobby | 1 | 0.33333 |
| 24 | Age | 1 | 0.33333 |
| Sushi | Food | 1 | 0.33333 |
| Canada | Place | 1 | 0.33333 |
| Romance | Relationships | 1 | 0.33333 |
| In College | Education | 1 | 0.33333 |
| CSI | Television | 2 | 0.66666 |
| 24 | Television | 1 | 0.33333 |
| Reading | Hobby | 1 | 0.33333 |

Data Processing

A web-based interface, as illustrated in FIGS. 4A and 4B, created using C# or a similar programming language, may provide a text-box 401 for a user to enter search words that he or she would like to process on the ICA engine 305. A "Search" button 402 is then placed next to the text box to direct the interface to have the search request processed.

When a word or group of words 405a, b is entered in the text box 401 and "search" 402 is clicked, the following steps are taken. All of the UserIDs from Table 1 that contain that Keyword 405a, b are found and counted. A table, shown below in Table 3, is then dynamically produced of all the co-occurring words 410 in those profiles with the number of occurrences of each one 415. This number 415 is then divided by the total number of unique UserIDs that include the entered word to give a percentage of co-occurrence 420.

The percentage of co-occurrence 420 is then divided by the value in Table 2, Field D (Popularity) of each co-occurring word 410 to yield a correlation ratio 425 indicating how much more or less common the co-occurring word 410 is when the entered word 405 is present. This correlation ratio 425 is used to order the resulting list of co-occurring words 410 which is presented to the user. As illustrated in FIG. 4B, when multiple words 405b are entered by the user, only profiles containing all the entered words 405b would be counted 415, but otherwise the process would be the same. The list of results can be further filtered using the Class field to show only resulting words from Classes of interest to the user. A final results table when the word "Fashion" is entered might look like this:

Table 3

| Co-occurring Word | Occurrence | Local Popularity | Correlation |
|---|---|---|---|
| Fashion | 3929 | 1.0000 | |
| Project runway | 10 | 0.0025 | 23.2 |
| Cosmetics | 15 | 0.0038 | 22.7 |
| Vogue | 8 | 0.0020 | 22.5 |

Concept Specific Ontology

Preferably, the main goal behind the CSO approach 310 is the representation of the semantic content of the terms without a need for user feedback or consumer profiling, as in the prior art. As such, the system 300, 310 is able to function without any statistical investigation. Instead, the user data is analyzed and correlated according to its meaning.

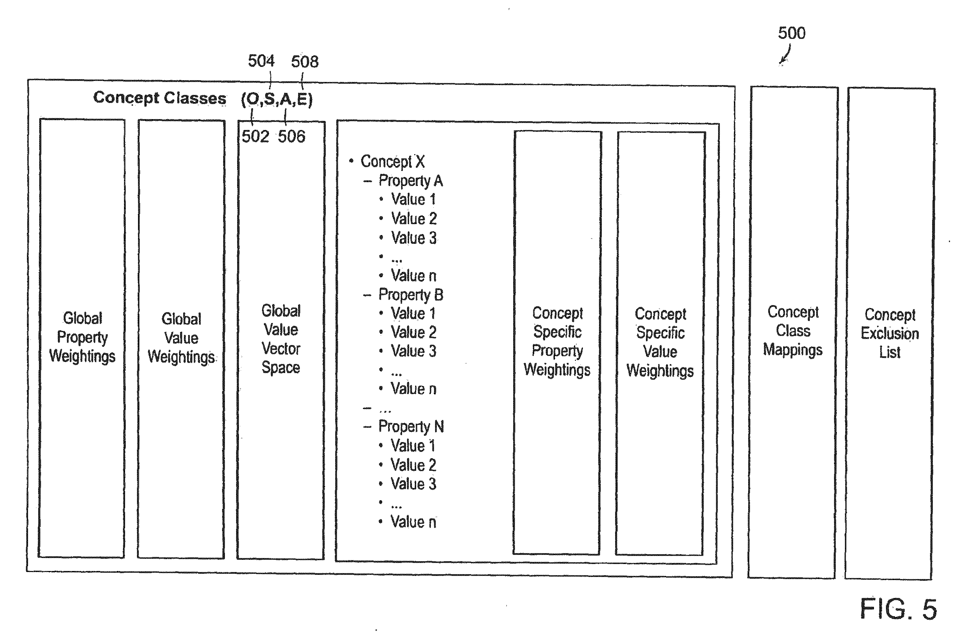

Unlike traditional search technology, the present invention's CSO semantic map 500, as illustrated in FIG. 5, enables fine-grained searches that are determined by the user's needs. CSO search technology 310 therefore offers the help of nuanced and directed comparisons by searching the semantic space for relations between concepts. In short, the present invention's CSO 310 provides a richly structured search space and a search engine of unprecedented precision.

Concepts

Concepts are the core of the CSO 310. A concept is a term (one or more words) with content, of which the CSO 310 has knowledge. Concepts are put into different classes. The classes can be, for example, objects 502, states 504, animates 506 and events 508. A concept can exist in one or more class. The following is an example of four concepts in the CSO 310 along with the respective class:

Table 4

| Concept | Class |
|---|---|
| run | event |
| accountant | animate |
| airplane | object |
| happy | state |

It should be noted that although example classes, objects 502, states 504, animates 506 and events 50, are discussed as an example implementation, according to another embodiment the recommendation system 300 can classify in other ways, such as by using traditional, hierarchical classes.

While traditional taxonomy can classify terms using a hierarchy according to their meaning, it is very limited with regard to the relationships they can represent (e.g., parent-child, siblings). Conversely, the present invention's ontological analysis classifies terms in multiple dimensions to enable the identification of similarities among concepts in diverse forms. However, in doing so, it also introduces severe complexities in the development. For instance, identifying dimensions believed to be relevant to meaningful recommendations requires extensive experimentation so that a functional model can be conceived.

Properties and Property Values

The CSO 310 uses properties, and these properties have one or more respective property values. An example of a property is "temperature" and a property value that belongs to that property would be "cold." The purpose of properties and property values in the CSO 310 is to act as attributes that capture the content of a concept. Table 5 below is a simplistic classification for the concept "fruit;"

Table 5

| Property | Property Value |
|---|---|
| Origin | Organic |
| Function | Nourish |
| Operation | Biological |
| Phase | Solid Liquid |
| Shape | Spheroid Cylindrical |
| Taste | Delicious Sweet Sour |
| Smell | Good food |
| Color | Red Orange Green Yellow Brown |
| Category | Kitchen/Gourmet |

Property values are also classed (event, object, animate, state). Concepts are associated to the property values that share the same class as themselves. For instance, the concept "accountant" is an animate, and hence all of its associated property values are also located in the "animate" class.

The main algorithm that the CSO 310 uses was designed to primarily return concepts that represent objects. Because of this, there is a table in the CSO 310 that links property values from events, animates and states to property values that are objects. This allows for the CSO 310 to associate concepts that are objects to concepts that are from other classes. An example of a linked property value is shown below:

Table 6

| Property:Property Value:Class | Related Property:Property Value:Class |
|---|---|
| Naturality:Action(Increase):Verb | Origin:Organic Object:Noun |

Property Value Weightings

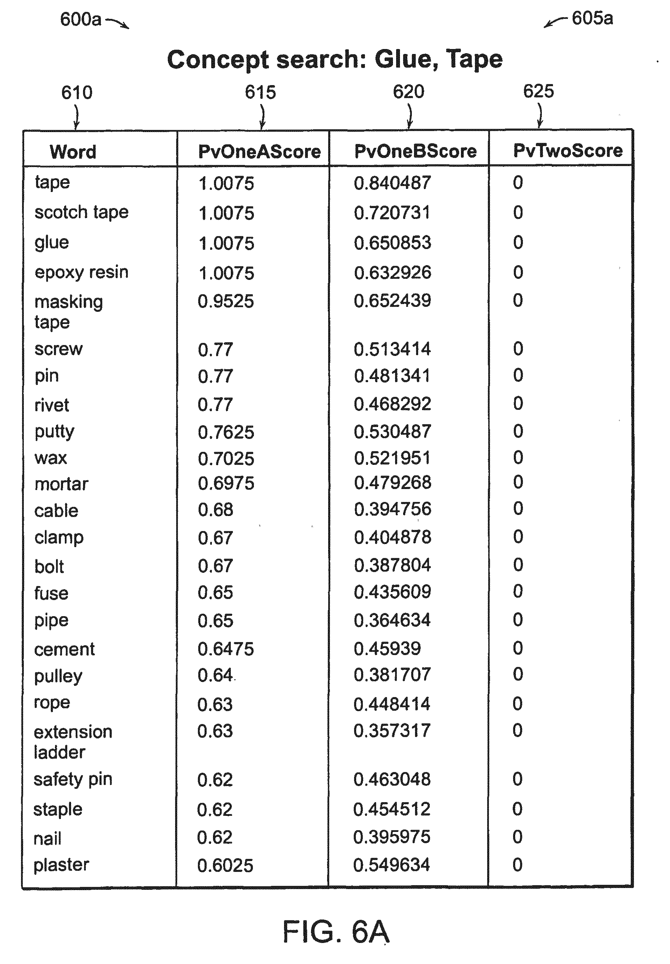

FIG. 6A illustrates the output 600a of the CSO algorithm 310 when the words "glue" and "tape" are used as input. The algorithm 310 ranks at the top of the list 600a words 610 that have similar conceptual content when compared to the words used as input 605a. Each property value has a corresponding coefficient that is used in its weight. This weight is used to help calculate the strength of that property value in the CSO similarity calculation so that the more important properties, such as "shape" and "function" have more power than the less important ones, such as "phase." The weighting scheme ranges from 0 to 1, with 1 being a strong weight and 0 being a weak weight. 615 and 620 show scores that are calculated based on the relative weights of the property values.

Further, the CSO 310 may consider certain properties to be stronger than others, referred to as power properties. Two such power properties may be "User Age" and "User Sex." The power properties are used in the algorithm to bring concepts with matching power properties to the top of the list 600a. If a term is entered that has power properties, the final concept expansion list 600a is filtered to include only concepts 610 that contain at least one property value in the power property group. By way of example, if the term "woman" is entered into the CSO, the CSO will find all of the property values in the database for that concept. One of the property values for "woman" is Sex:Female. When retrieving similar concepts to return for the term "woman," the CSO 310 will only include concepts that have at least one property value in the "sex" property group that matches one of the property values of the entered term, "woman."

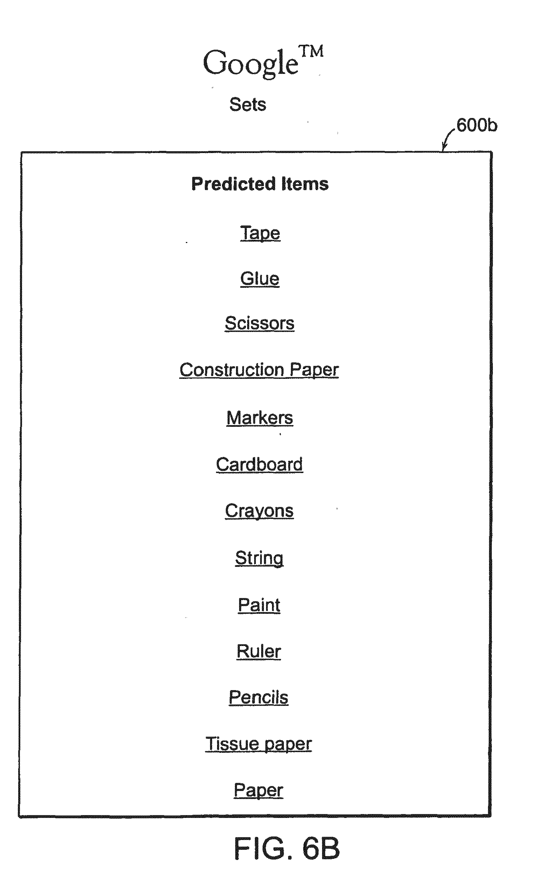

A key differentiator of the present invention's CSO technology 310 is that it allows for a search of wider scope, i.e., one that is more general and wide-ranging than traditional data mining. Current implementations, such as Google Sets, as illustrated in FIG. 6B, however, are purely based on the statistical analysis of the occurrences of terms on the World Wide Web.

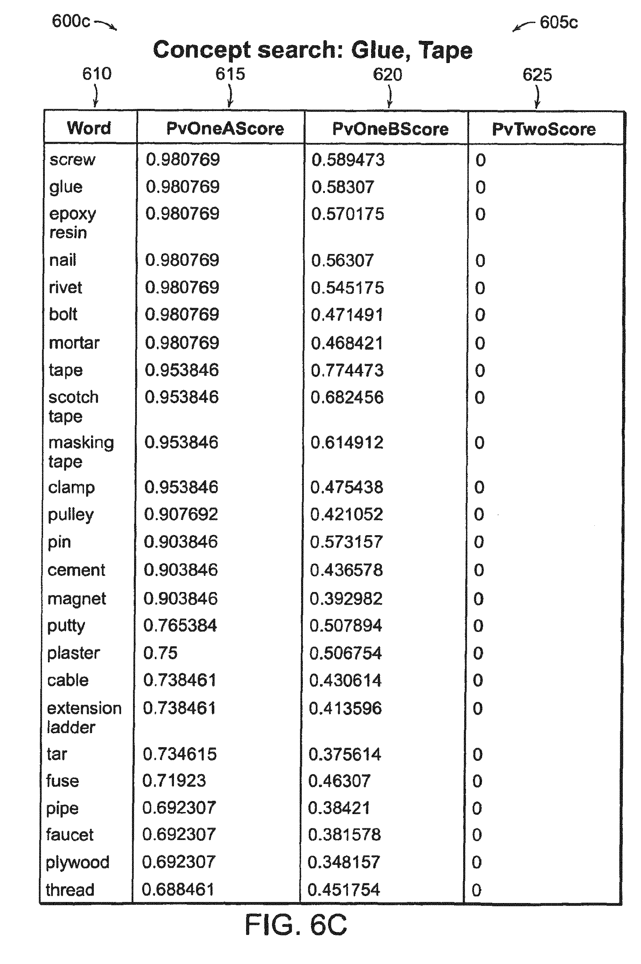

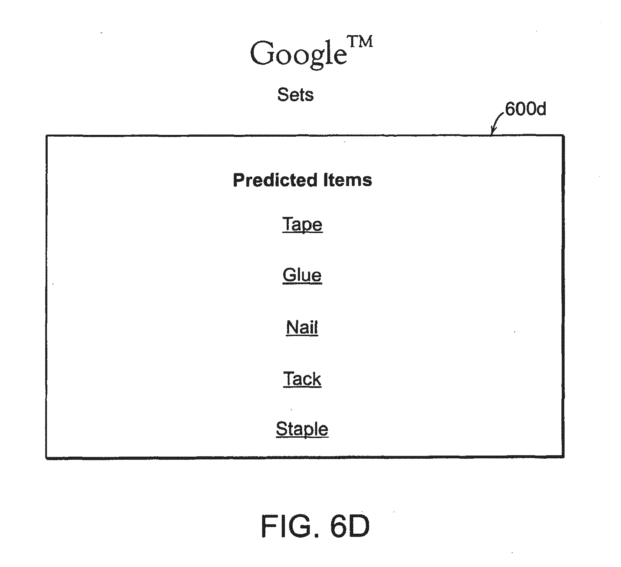

In fact, this difference in technology is highlighted when comparing FIGS. 6A and 6C with 6B and 6D. The output list 600c from the CSO algorithm based on three input words (glue, tape, nail) 605c, as illustrated in FIG. 6C, is considerably larger and more diverse than the output list 600a generated by the CSO algorithm with two words (glue, tape) as input 605a, as shown in FIG. 6A. In contrast, the statistical Google Sets list 600d of FIG. 6D is smaller than the list 600b of FIG. 6B because that technology relies only on occurrences of terms on the World Wide Web.

Data Processing

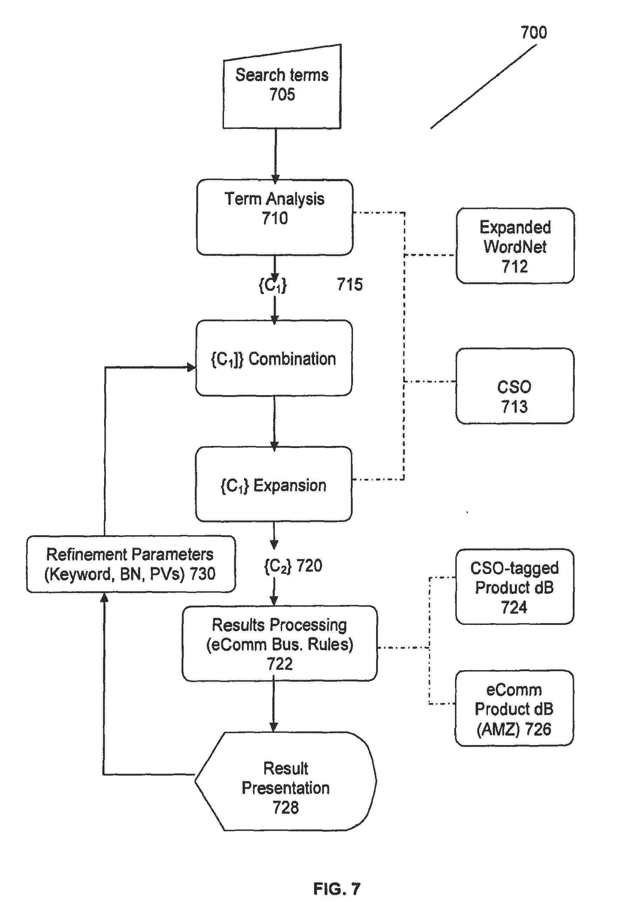

In operation, as illustrated in the flow chart 700 of FIG. 7, an example embodiment of the CSO 310, at step 705, takes a string of terms and, at step 710, analyzes the terms. At step 715, the CSO 310 parses the entry string into unique terms and applies a simple natural language processing filter. At step 715, a pre-determined combination of one or more words is removed from the string entered. Below, in Table 7, is an example list of terms that are extracted out of the string entered into the application:

Table 7

| | | | | |
|---|---|---|---|---|
| all | likes | she | he | were |
| some | loves | hers | his | interested |
| every | wants | day old | on | in |
| each | year | days old | by | interests |
| exactly | years | the | over | interest |
| only | year old | love | under | its |
| other | years old | if | beside | had |

(continued)

| a | months | but | per | have |
|---|--------|-----|-----|------|
| who | old | needs | need | has |
| is | month old | whom | turning | want |
| an | and | also | age | wants |
| I | or | though | them | of |
| me | not | although | out | to |
| we | just | unless | ours | at |
| us | is | my | liked | was |
| they | are | it | loved | their |

The CSO 310 attempts to find the individual parsed terms in the CSO list of concepts 713. If a term is not found in the list of known concepts 713, the CSO 310 can use simple list and synsets to find similar terms, and then attempt to match these generated expressions with concepts 713 in the CSO 310. In another example, the CSO 310 may use services such as WordNet 712 to find similar terms. The order of WordNet 712 expansion is as follows: synonyms - noun, synonyms - verb, hypernyms - noun, co-ordinate terms - noun, co-ordinate terms - verb, meronyms - noun. This query to WordNet 712 produces a list of terms the CSO 310 attempts to find in its own database of terms 713. As soon as one is matched, the CSO 310 uses that concept going forward. If no term from the WordNet expansion 712 is found, that term is ignored. If only states from the original term list 705 are available, the CSO 310 retrieves the concept "thing" and uses it in the calculation going forward.

The CSO 310 then creates property value (PV) sets based on the concepts found in the CSO concepts 713. The list 715 of initial retrieved concepts is referred to as $C_1$. Three property value sets are retrieved for $C_1$: a) PV set 1a, Intersect$[C_1, n, v, a]$; b) PV set 1b, Union$[C_1, n, v, a]$, where n is noun, v is verb, and a is animate; and PV set 2, Union$[C_1, s]$, where property value yes = 1 for states.

The CSO 310 then performs similarity calculations and vector calculation using weights of each PV set. Weighted Total Set (WTS) is the summation of weights of all property values for each PV set. Weighted Matches (WM) is the summation of weights of all matching PVs for each CSO concept relative to each PV set. The Similarity Score (S) is equal to WM/WTS.

The CSO 310 then applies the power property filter to remove invalid concepts. At step 720, the CSO 310 then creates a set of concepts $C_2$ based on the following rules. $C_2$ is the subset of CSO nouns where $S_{1a} > 0$. If $C_2$ has fewer than X elements (X=60 for default), then use $S_{1b} > 0$ followed by $S_2 > 0$ to complete set. Order keywords by $S_{1a}$, $S_{1b}$, $S_2$ and take the top n values (n = 100 for default). Order keywords again by $S_2$, $S_{1a}$, $S_{1b}$ and take the top x values (x = 60 for default).

At step 722, results processing occurs. The results mixer 360 determines how the terms are fed into the ICA 305 or CSO 310 and how data in turn is fed back between the two systems. In addition, rules can be applied which filter the output to a restricted set (e.g., removing foul language or domain inappropriate terms). The power properties that need to be filtered are determined. The CSO domain to use and the demographic components of the ICA database to use are also determined. The results processing connects to the content databases to draw back additional content specific results (e.g., products, not just a keyword cloud). For example, at step 724, it connects to the CSO-tagged product database of content (e.g., products or ads), which has been pre-tagged with terms in the CSO database. This access enables the quick display of results. At 726, it connects to the e-commerce product database, which is an e-commerce database of products (e.g., Amazon). The results processor (722) passes keywords to the database to search text for best matches and display as results. At 728, the results are presented using the user interface/application programming interface component 355 of this process. The results are displayed, for example, to the user or computer. At 730, the search results can be refined. For example, the user can select to refine their results by restricting results to a specific keyword(s), Property Value(s) (PV) or an e-commerce category (such as Amazon's BN categories).

Manage Users

The CSO 310 may have users (ontologists) who edit the information in it in different ways. Management tools 362 are provided to, for example, set user permissions. These users will have sets of permissions associated with them to allow them to perform different tasks, such as assigning concepts to edit, etc. The editing of users using the management tools 362 should allow user creation, deletion, and editing of user properties, such as first name, last name, email address and password, and user permissions, such as administration privileges.

Users should have a list of concepts that they own at any given time. There are different status tags associated with a concept, such as "incomplete," "for review" and "complete." A user will only own a concept while the concept is either marked with an "incomplete" status, or a status "for review." When a concept is first added to the CSO concepts 713, it will be considered "incomplete." A concept will change from "incomplete" to "for review" and finally to "complete." Once the concept moves to the "complete" status, the user will no longer be responsible for that concept. A completed concept entry will have all of its property values associated with it, and will be approved by a senior ontologist.

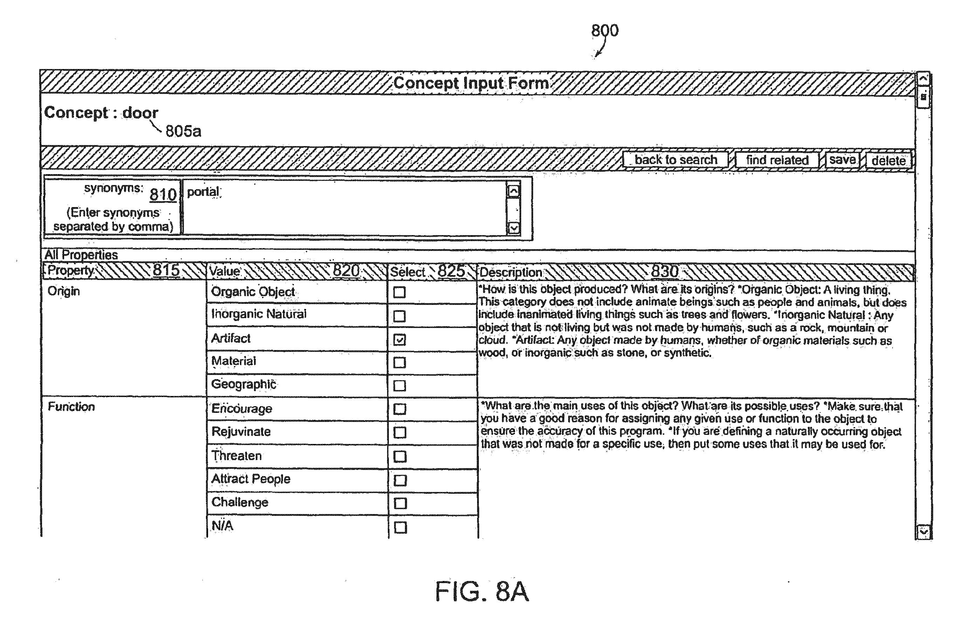

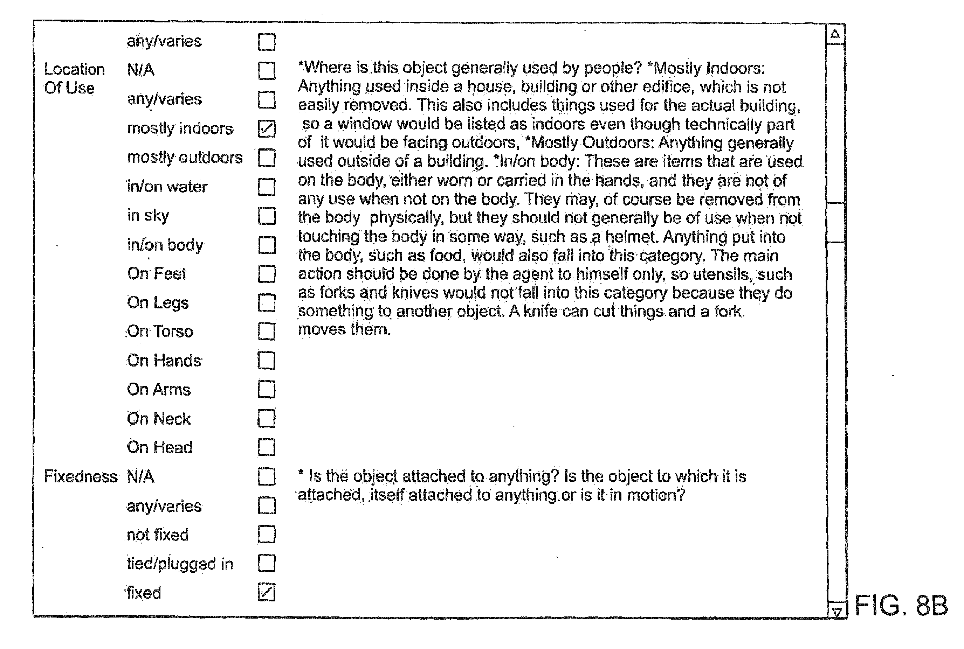

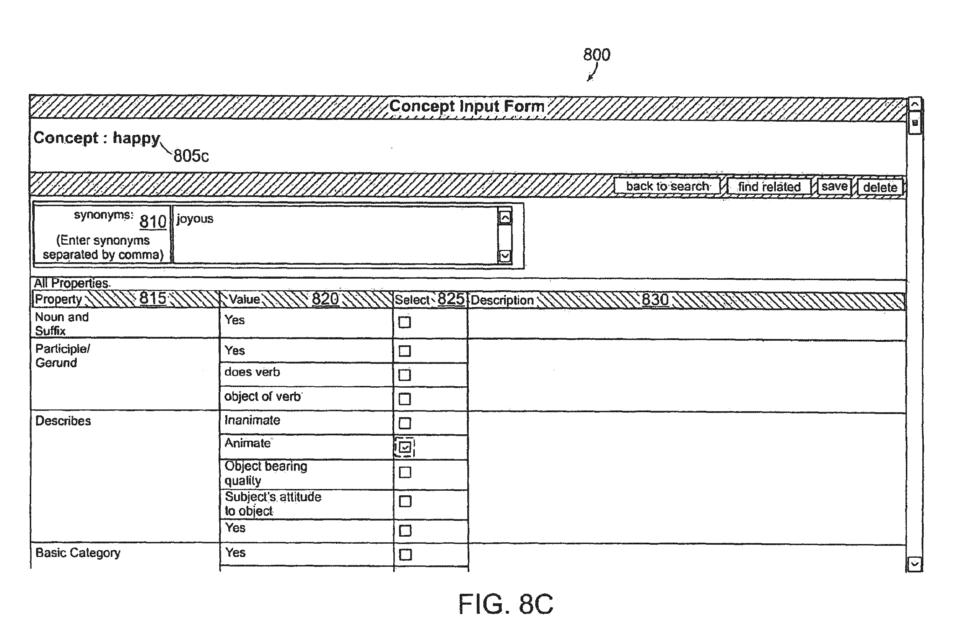

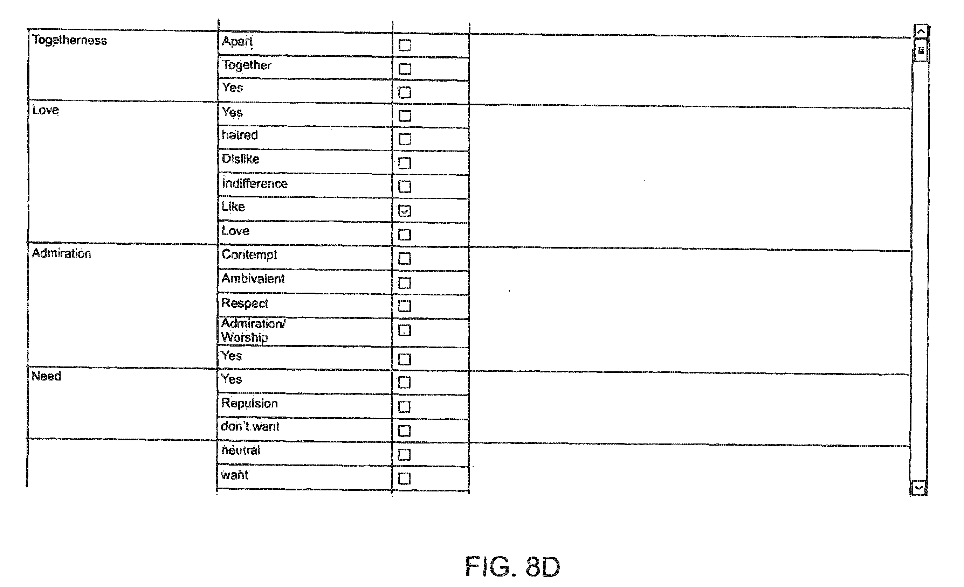

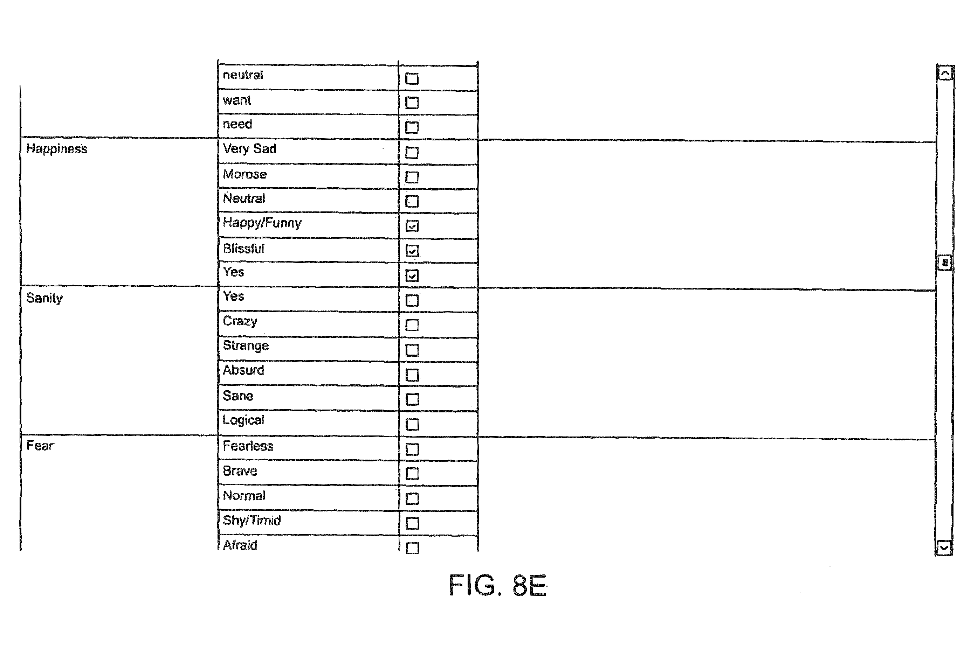

An ontologist may input concept data using the Concept Input Form 800, as illustrated in FIGS. 8A-8E. FIGS. 8A-8B illustrate the Concept Input Form 800 for the concept "door" 805a. The Concept Input Form 800 allows the ontologist to assign synonyms 810, such as "portal," for the concept 805a. Further, a list of properties 815, such as "Origin," "Function," "Location Of Use" and "Fixedness," is provided with associated values 820. Each value 820, such as "Organic Object," "Inorganic Natural," "Artifact," "material," and so on, has a method to select 825 that value. Here, "Artifact," "mostly indoors" and "fixed" are selected to describe the "Origin," "Location Of Use," and "Fixedness" of a "door" 805a, respectively. Further, there is a description field 830 that may describe the property and each value in helping the ontologist correctly and accurately input the concept data using the Concept Input Form 800. FIGS. 8C-8E similarly illustrate the Concept Input Form 800 for the concept "happy" 805c. Here, the values "Animate," "Like," "Happy/ Funny," "Blissful," and "Yes" are selected to describe the properties "Describes," "Love," and "Happiness" for the concept "happy" 805c, respectively.

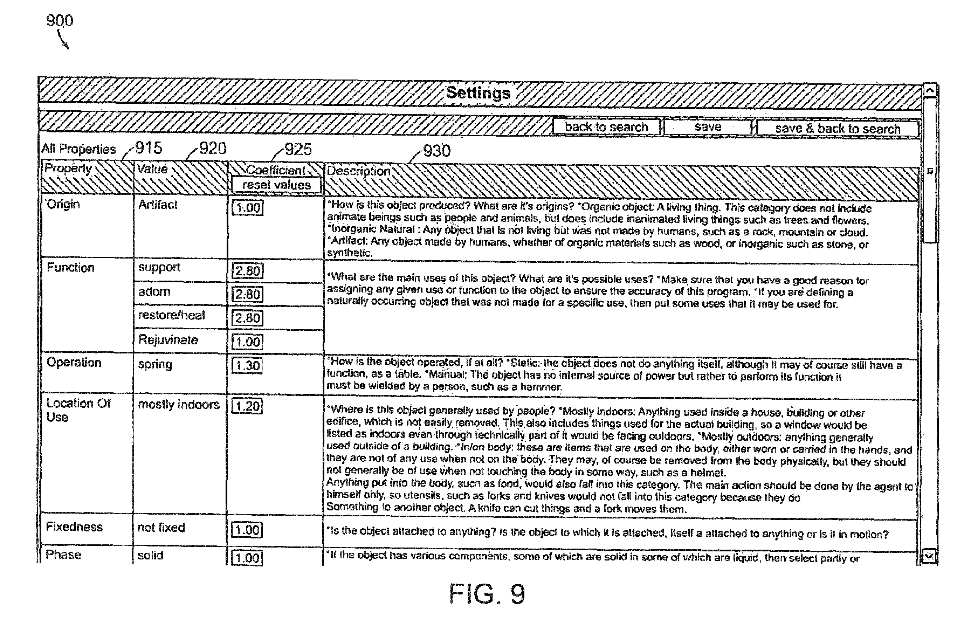

Further, as described above with reference to FIG. 6A, each property value has a corresponding weight coefficient. An ontologist may input these coefficient values 915 using the Settings form 900, as illustrated in FIG. 9. Here, each value 920 associated with each property 915 may be assigned a coefficient 925 on a scale of 1 to 10, with 1 being a low weighting and 10 being a high weighting. These properties 915, values 920 and descriptions 930 correspond to the properties 815, values 820 and descriptions 830 as illustrated in FIGS. 8A-8E with reference to the Concept Input Form 800.

Multiple Ontology Application

The data model can support the notion of more than one ontology. New ontologies will be added to the CSO 310. When a new ontology is added to the CSO 310 it needs a name and weighting for property values.

One of the ways that ontologies are differentiated from each other is by different weighting, as a per concept property value level. The CSO 310 applies different weighting to property values to be used in the similarity calculation portion of the algorithm. These weightings also need to be applied to the concept property value relationship. This will create two levels of property value weightings. Each different ontology applies a weight to each property per concept. Another way a new ontology can be created is by creating new properties and values.

Domain Templates

The present invention's CSO technology 310 may also adapt to a company's needs as it provides a dynamic database that can be customized and constantly updated. The CSO 310 may provide different group templates to support client applications of different niches, specifically, but not limited to, e-commerce. Examples of such groups may include "vacation," "gift," or "default." The idea of grouping may be extendable because not all groups will be known at a particular time. The CSO 310 has the ability to create new groups at a later time. Each property value has the ability to indicate a separate weighting for different group templates. This weighting should only be applicable to the property values, and not to the concept property value relation.

Dynamic Expansion Algorithms

In the CSO 310, concept expansion uses an algorithm that determines how the concepts in the CSO 310 are related to the terms taken in by the CSO 310. There are parts of this algorithm that can be implemented in different ways, thereby yielding quite different results. These parts may include the ability to switch property set creation, the calculation that produces the similarity scores, and finally the ordering of the final set creation.

Property set creation may be done using a different combination of intersections and unions over states, objects, events and animates. The CSO 310 may have the ability to dynamically change this, given a formula. Similarity calculations may be done in different ways. The CSO 310 may allow this calculation to be changed and implemented dynamically. Sets may have different property value similarity calculations. The sets can be ordered by these different values. The CSO may provide the ability to change the ordering dynamically.

API Access

The CSO 310 may be used in procedure, that is, linked directly to the code that uses it. However, a layer may be added that allows easy access to the concept expansion to allow the CSO 310 to be easily integrated in different client applications. The CSO 310 may have a remote façade that exposes it to the outside world. The CSO 310 may expose parts of its functionality through web services. The entire CSO application 310 does not have to be exposed. However, at the very least, web services may provide the ability to take in a list of terms along with instructions, such as algorithms, groups, etc., and return a list of related terms.

Iterative Classification Feedback - Combining ICA and CSO Results

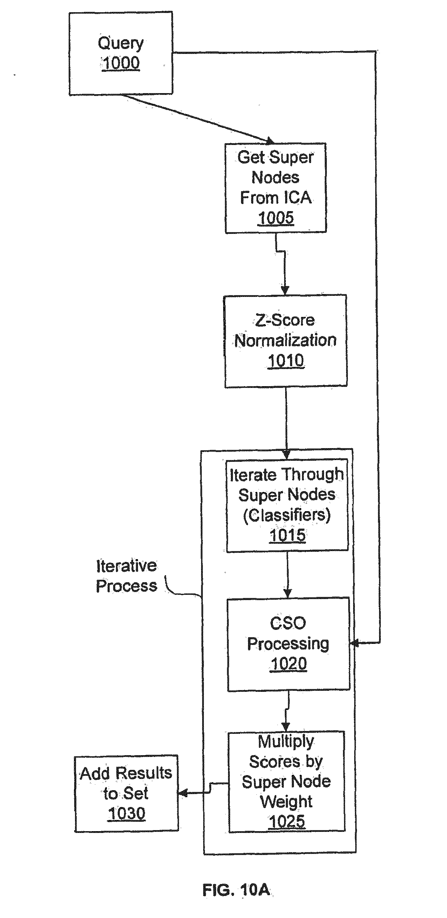

Results from the ICA and the CSO may be combined through a process referred to as Iterative Classification Feedback (ICF). As illustrated in FIGS. 3A and 10A, the ICA 305 is used, as described above, as a classifier (or profiler) that narrows and profiles the query according to the feed data from the ICA 305. The term analyzer 363 is responsible for applying Natural Language Processing rules to input strings. This includes word sense disambiguation, spelling correction and term removal. The results mixer 360 determines how the terms are fed into the ICA 305 or CSO 310 and how data in turn is fed back between the two systems. In addition, rules can be applied which filter the output to a restricted set (e.g., removing foul language or domain inappropriate terms). The results mixer 360 also determines what power properties to filter on, what CSO domain to use and what demographic components of the ICA database to use (e.g., for a Mother's Day site, it would search the female contributors to the ICA database).

The super nodes (384 of FIG. 3B) generated by the ICA as a result of a query 1000 are retrieved from the ICA 1005 and normalized 1010. The top n nodes (super nodes) are taken from the set (for example, the top three nodes). Each concept of the super nodes is fed individually through an iterative process 1015 with the original query to the CSO 1020 to generate more results. The CSO, as described above, will produce a result of scored concepts. The results are then normalized to assure that the scores are between zero and one.

Both the ICA and CSO generate an output. However, the ICA additionally determines the super nodes associated with the input terms which are input back into the CSO 1020 to generate new results. Thus, the CSO process 1020 acts as a filter on the ICA results 1005. The output of the CSO processing 1020 is a combination of the results as calculated by the CSO from the input terms and the result as calculated by the super nodes generated by the ICA 1005 and input into the CSO. All the scores from the CSO are then multiplied by the weight of the super node 1025. This process is iterated through all the super nodes, with the final scores of the concepts being added up 1030. After the completion of all iterations, the final list of ICF scored concepts is provided as the end result.

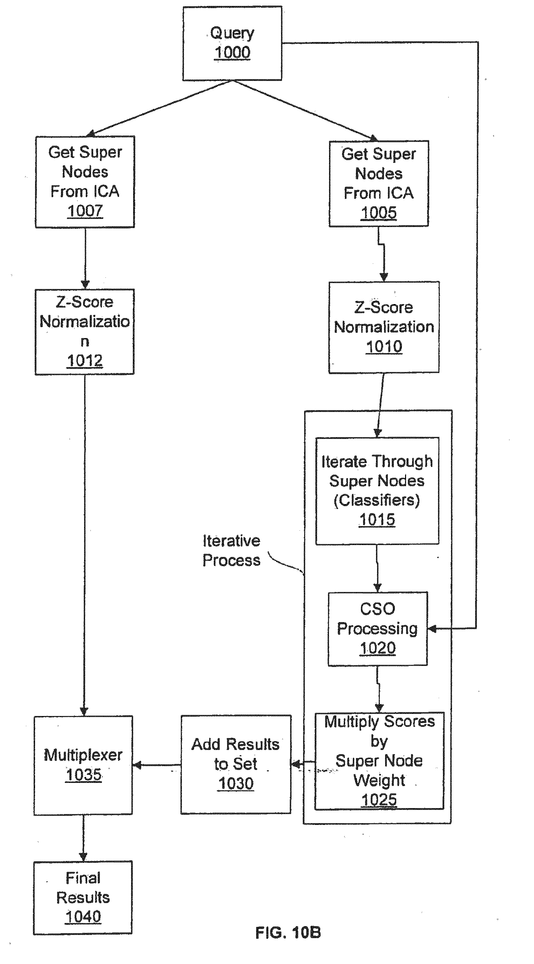

However, as illustrated in FIG. 10B, the final set of output terms may also be populated with direct results from the ICA. Here, after producing the final scored concepts from the ICF as in FIG. 10A, a list of Level 1 super nodes (384 of FIG. 3B) is retrieved from the ICA (step 1007) and normalized 1012. A multiplexer 1035 then uses these two sets of results to identify the relative quality of each set and outputs the sets using the ratio of the relative qualities to the final ICF result 1040.

Example Applications

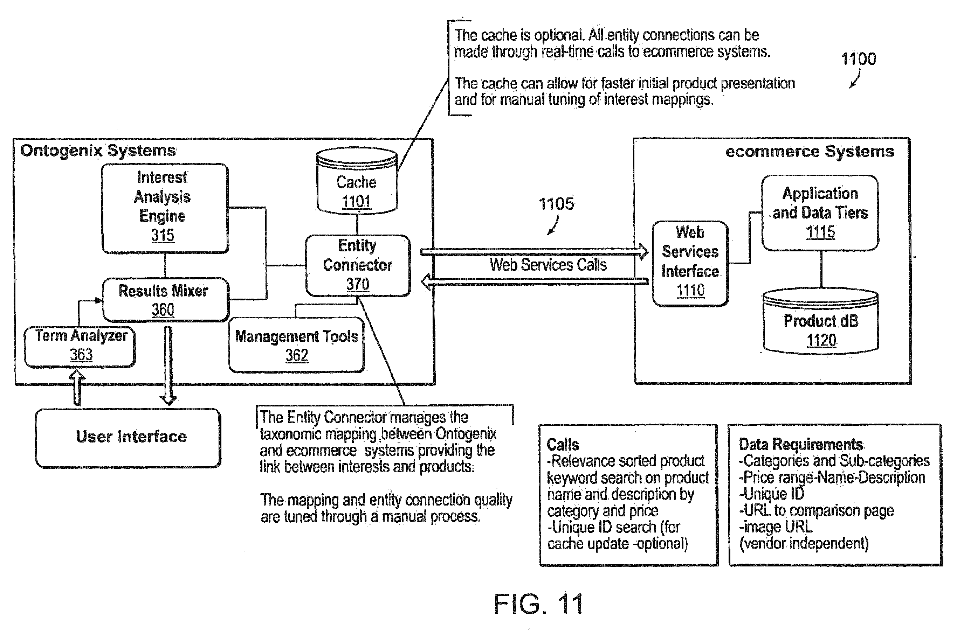

The recommendation system 300, including the ICA engine 305 and CSO 310, may be employed by web services, such as online merchants, for making product recommendations to customers. As illustrated in FIG. 11, the ICA engine 305 may interface with an entity connector 370 for making connections to web services 1100 via web services calls 1005 from a web services interface 1110. The data passed to and from the web services interface 1110 and the entity connector 370 may be stored in a cache 1101. The cache 1101 can allow for faster initial product presentation and for manual tuning of interest mappings. However, all entity connections may be made through real-time calls 1105.

The entity connector 370 manages the taxonomic mapping between the ICA engine 305 and the web service 1100, providing the link between interests and products 365. The mapping and entity connection quality may be tuned, preferably, through a manual process.

Web service calls 1005 between the entity connector 370 and the web services interface 1110 may include relevance-sorted product keyword searches, searches based on product name and description, and searches sorted by category and price. The product database 1120 may have categories and subcategories, price ranges, product names and descriptions, unique identifiers, Uniform Resource Locators (URLs) to comparison pages, and URLs to images.

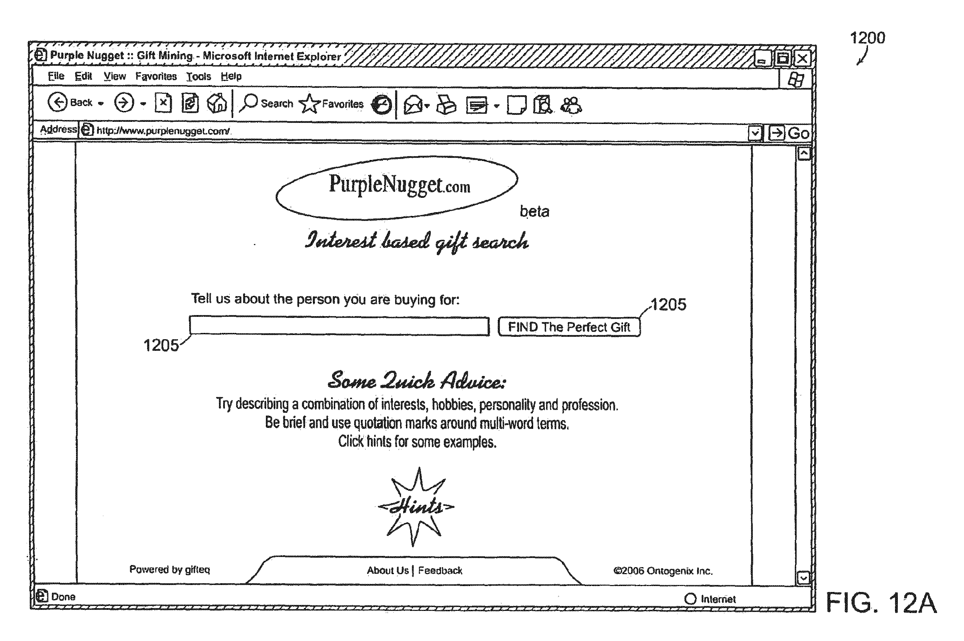

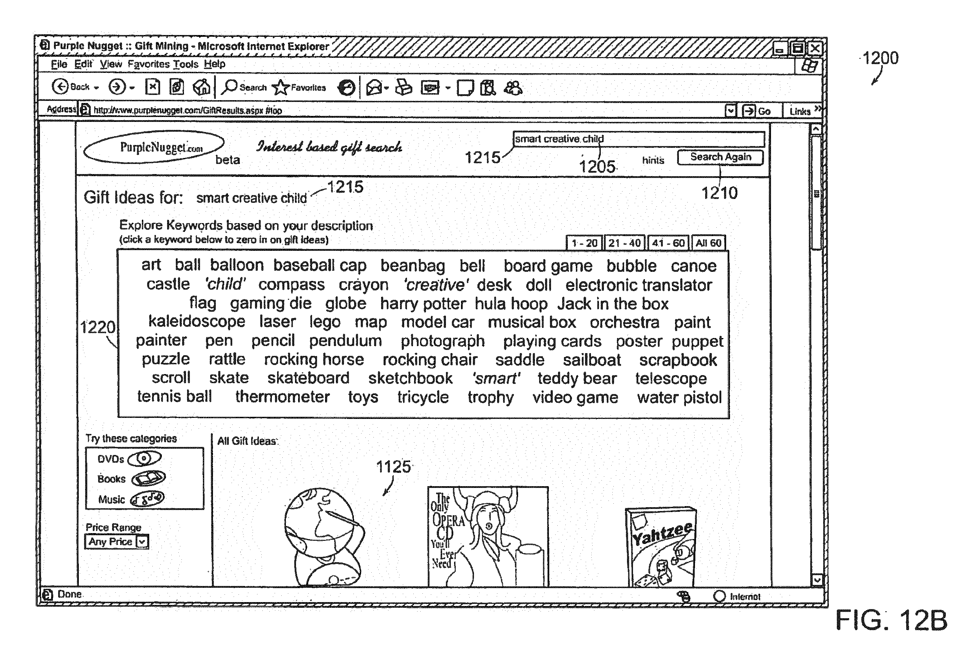

Thus, based on this connection, a web-based application may be created, as illustrated in FIGS. 12-19 As illustrated in FIG. 12A, a gift-recommendation website employing the recommendation system 300 of the present invention, which is shown in this example as PurpleNugget.com 1200, provides a text box 1205 and search button 1210. When search terms, such as "smart," "creative," and "child," are entered, as illustrated at 1215 in FIG. 12B, additional suggested keywords 1220 are provided along with suggested gift ideas 1225.

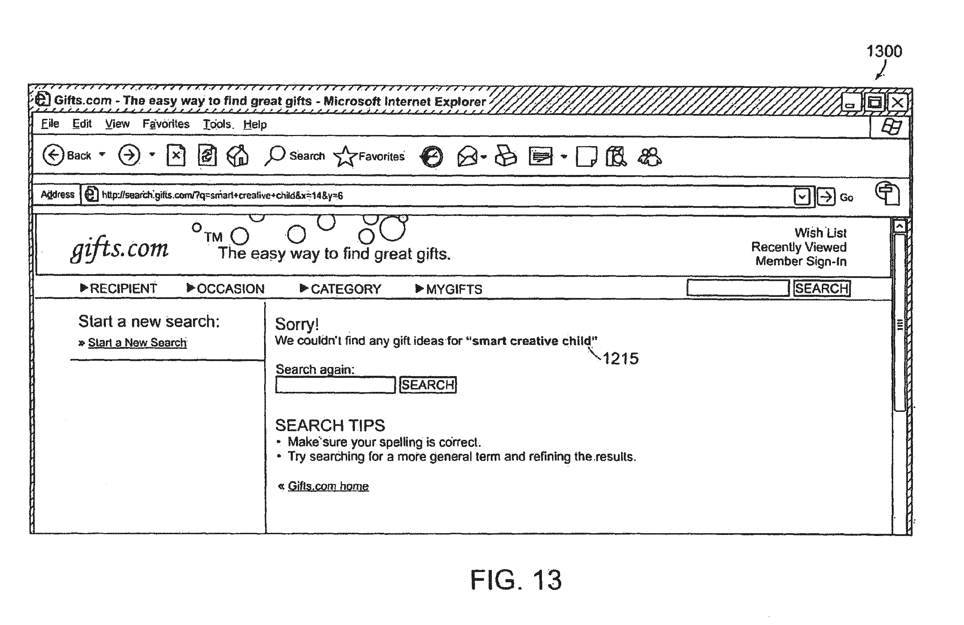

In comparison, as illustrated in FIG. 13, as search for the same terms 1215 "smart," "creative," and "child" on a conventional e-commerce website, such as gifts.com 1300, yields no search results.

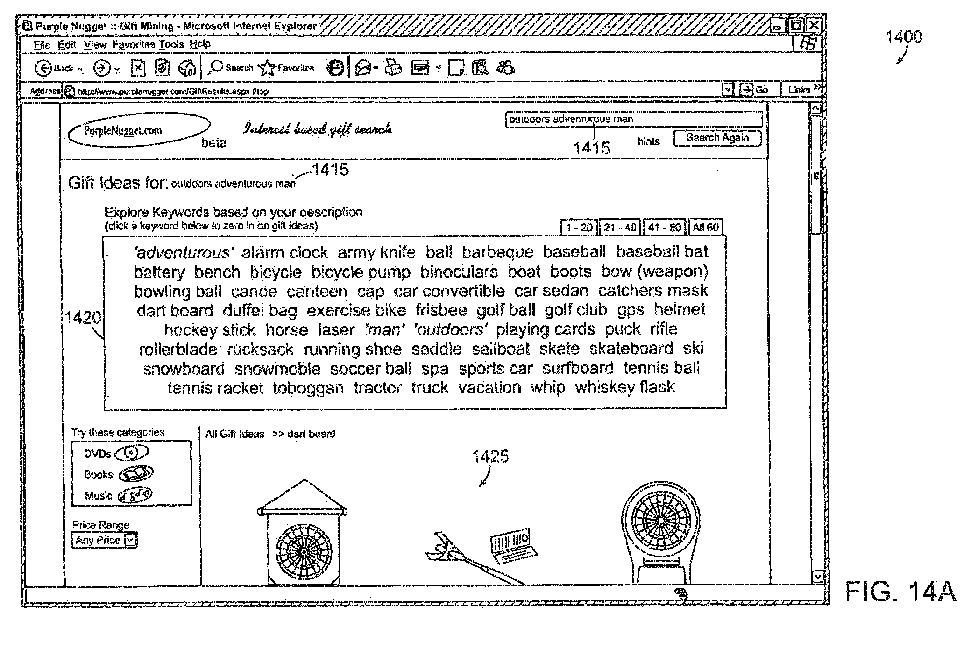

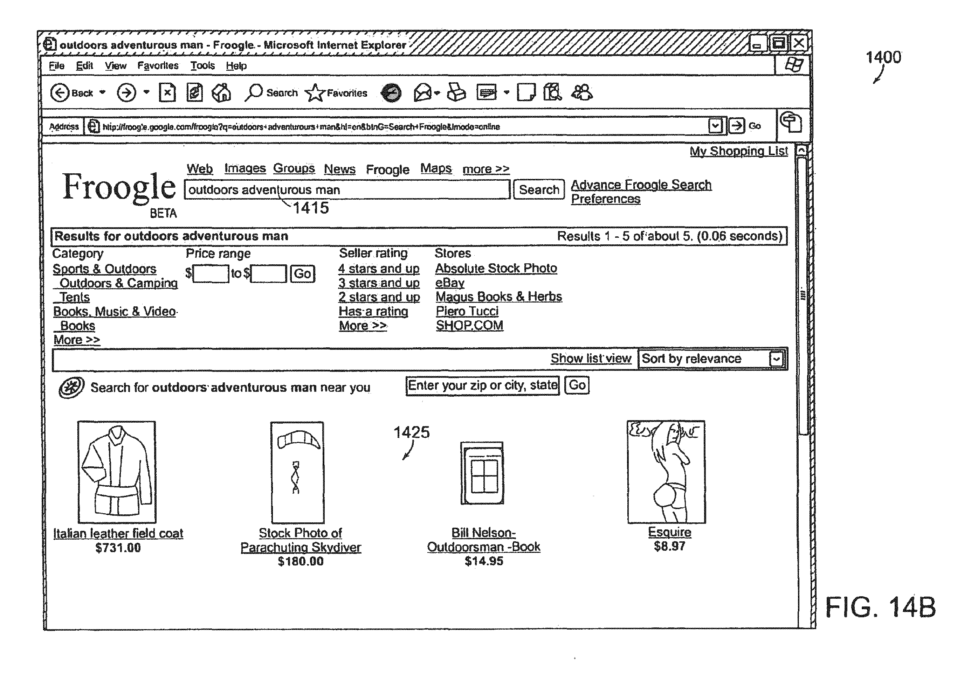

A search for "outdoor," "adventurous," "man" 1415 on PurpleNugget.com 1200 as illustrated in FIG. 14A, however, yields numerous suggested keywords 1220 and gift results 1225. In contrast, an identical search 1415 on an e-commerce website not employing the ICA engine 305 of the present invention, such as froogle.google.com 1400, as illustrated in FIG. 14B, yields limited results 1425 and does not provide any additional keywords.

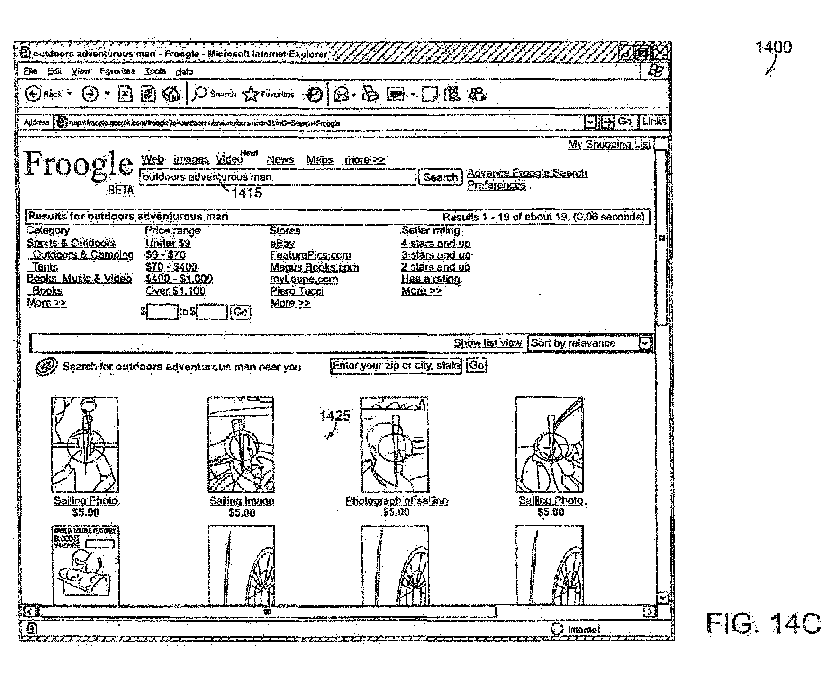

By coupling components of the recommendation system 300 of the present invention to conventional product search technology, such as froogle.google.com 1400, a greater and more varied array of suggested gifts 1425 can be provided, as illustrated in FIG. 14C. A user can enter a query that consists of interests or other kinds of description of a person. The system returns products that will be of interest to a person who matches that description.

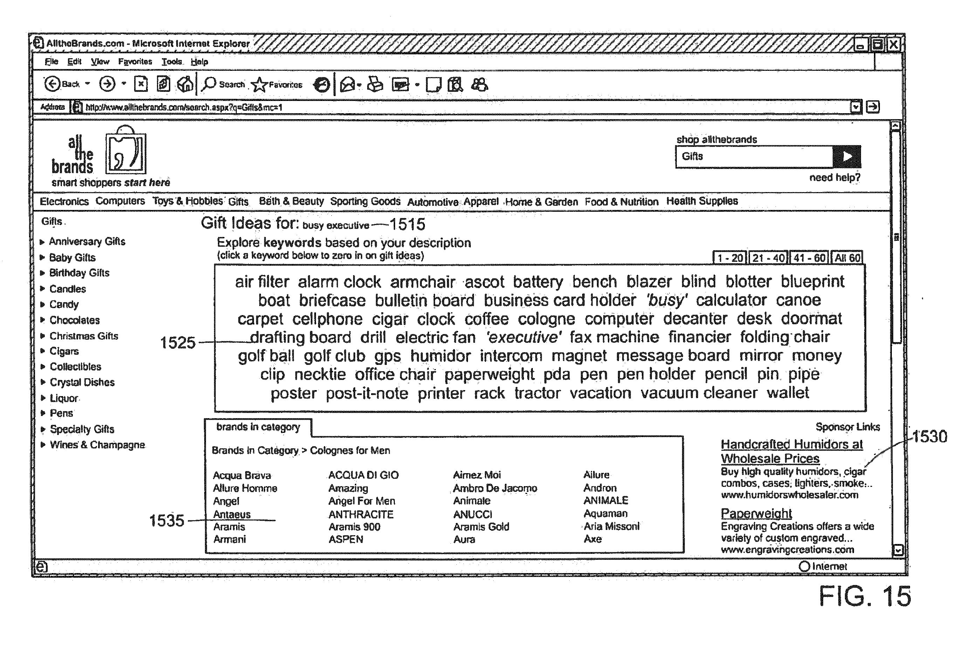

The recommendation system 300 may also be employed in applications beyond gift suggestion in e-commerce. The system can be adapted to recommend more than products on the basis of entered interests, such as vacations, services, music, books, movies, and compatible people (i.e. dating sites). In the example shown in FIG. 15, a search for particular keywords 1515, may provide not only suggested keywords 1525 but also advertisements 1530 and brands 1535 related to those keywords. Based on an entered set of terms, the system can return ads that correspond to products, interests, vacations, etc. that will be of interest to a person who is described by the entered search terms.

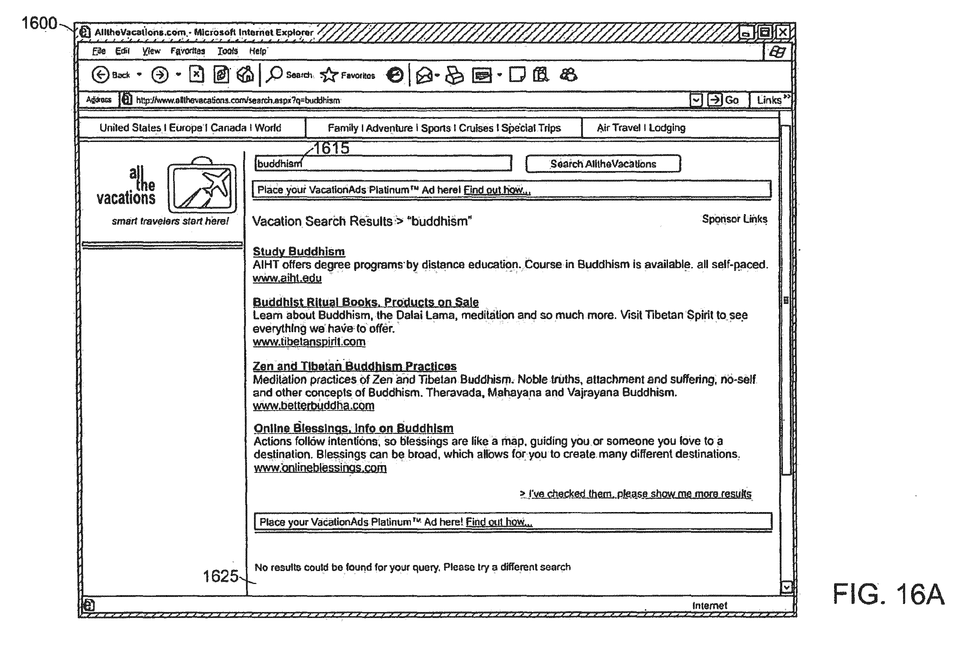

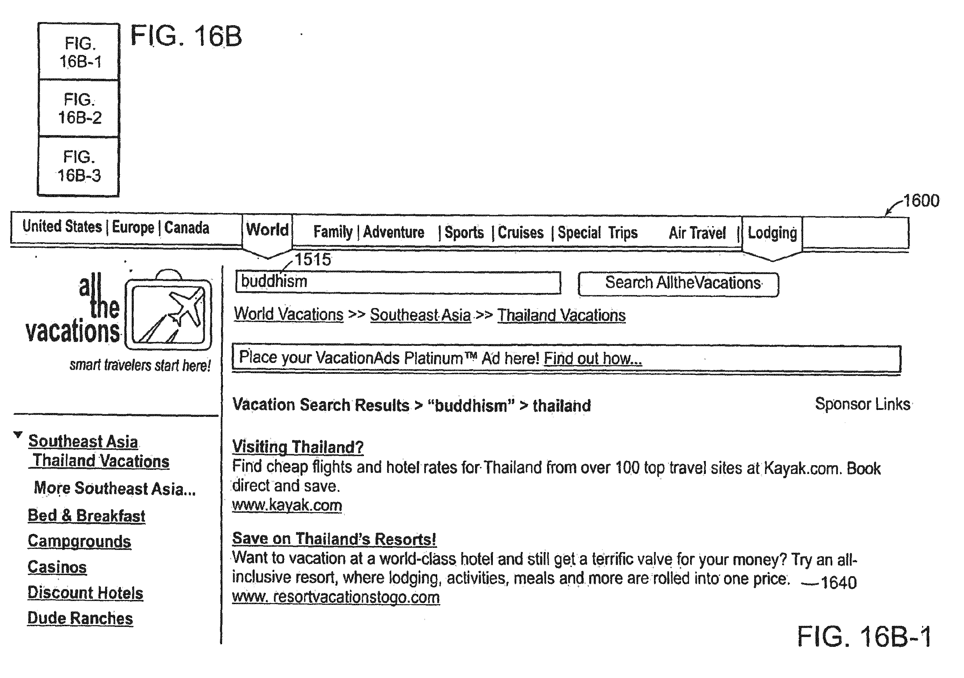

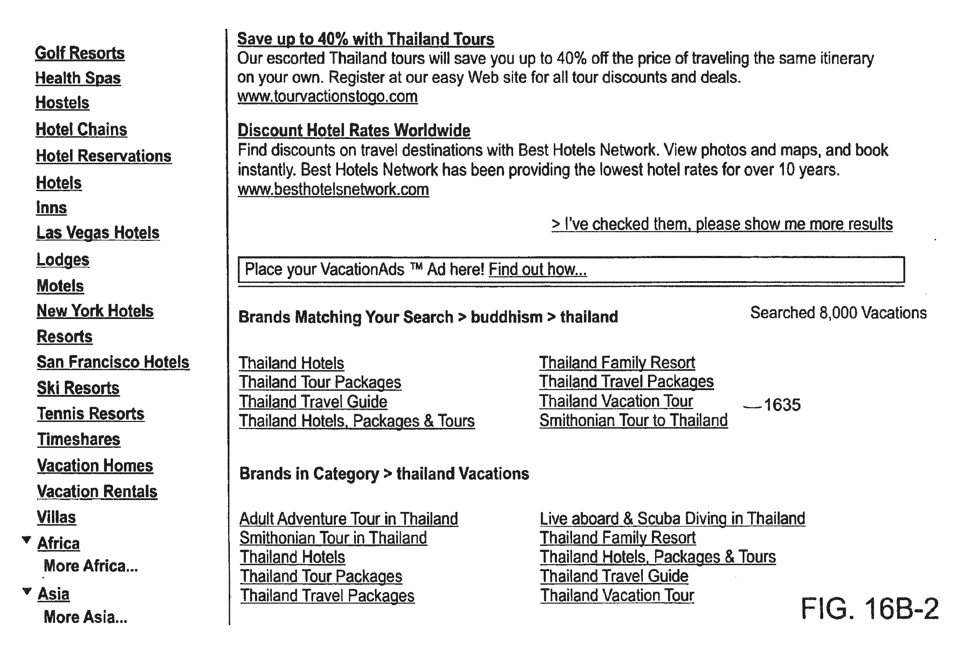

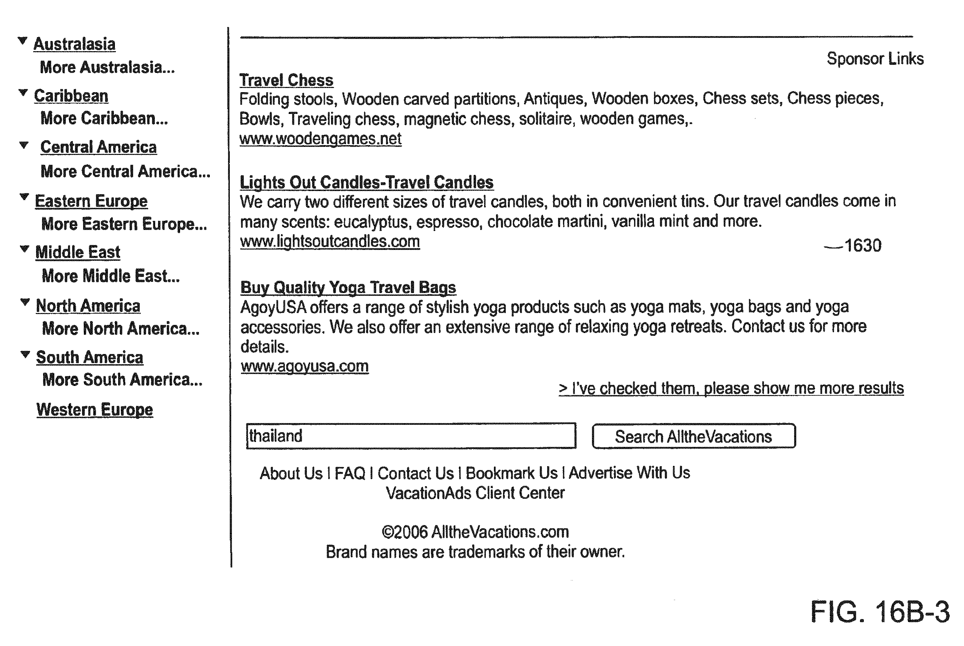

Further, a search on a traditional vacation planning website, such as AlltheVacations.com 1600, as illustrated in FIG. 16A, provides no results 1625 for a search with the keyword 1615 "Buddhism." However, as illustrated in FIGS. 16B-1 through 16B-3, by adding components of the recommendation system 300 of the present invention to conventional search technology 1600 provides a broader base of related search terms 1640, yields search results 1635 suggesting a vacation to Thailand, and provides search-specific advertising 1630.

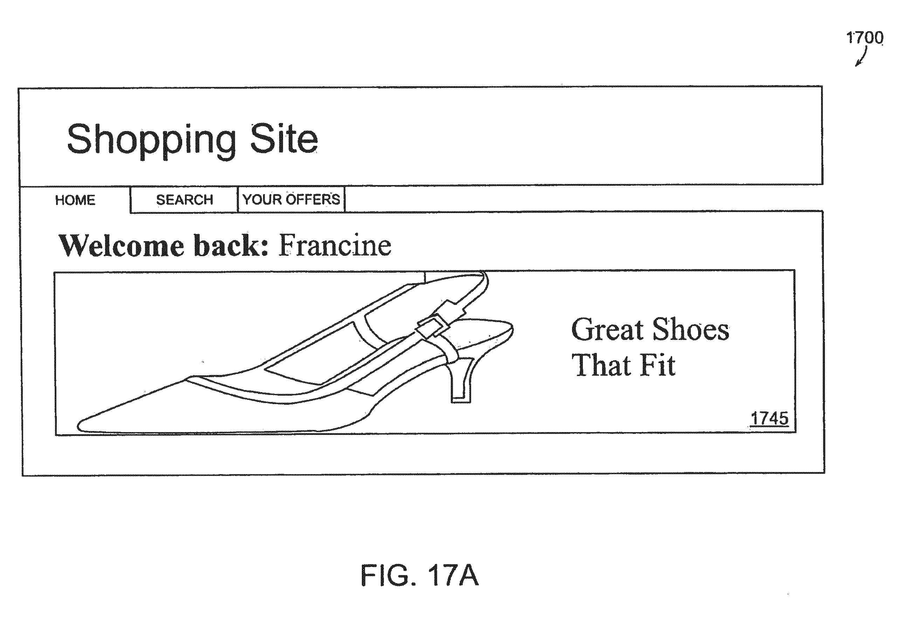

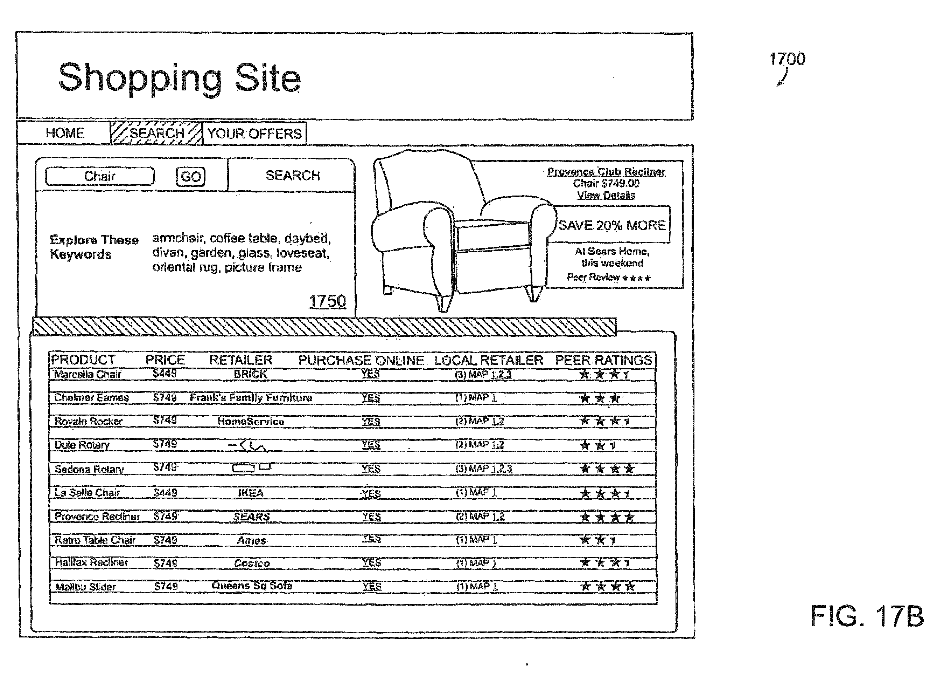

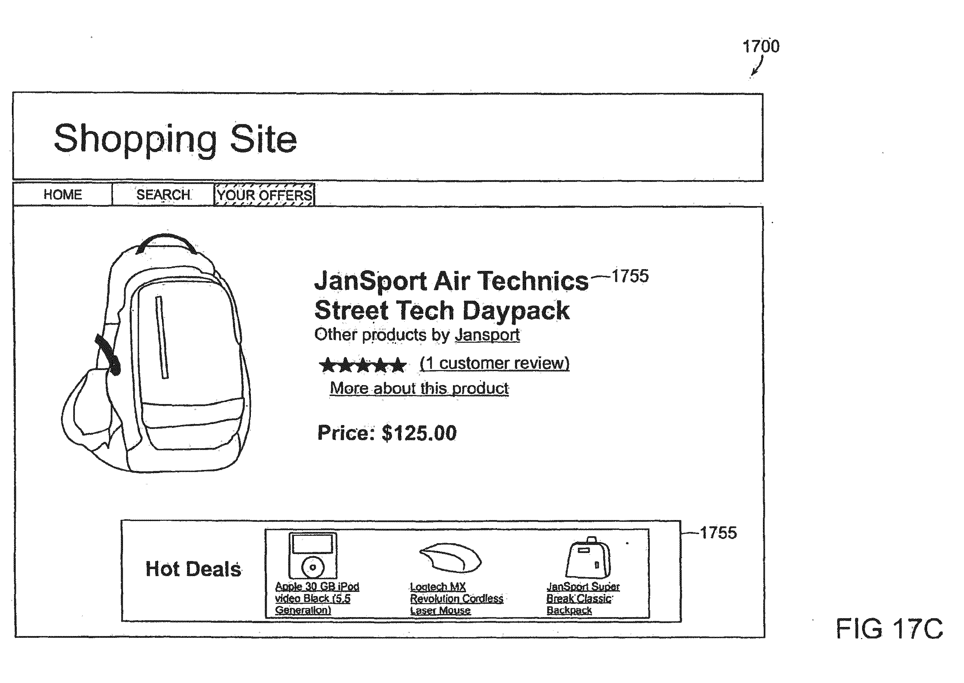

Moreover, value may be added to websites 1700, by allowing product advertisements 1745 aligned with consumer interests to be provided, as illustrated in FIG. 17A; suggested keywords 1750 based on initial search terms may be supplied, as illustrated in FIG. 17B; or hot deals 1755 may be highlighted based on user interest, as illustrated in FIG. 17C.

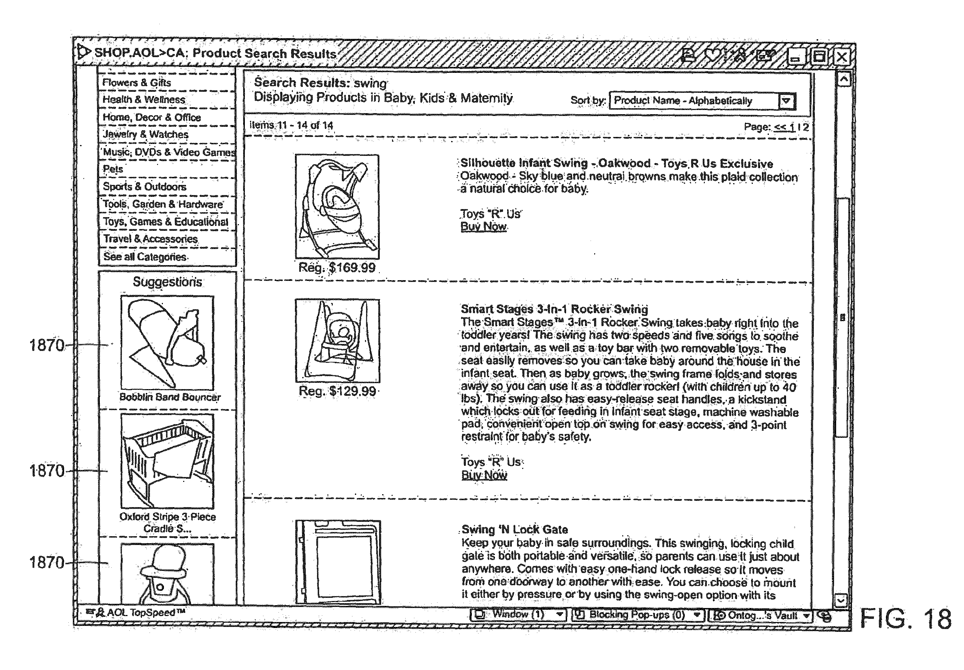

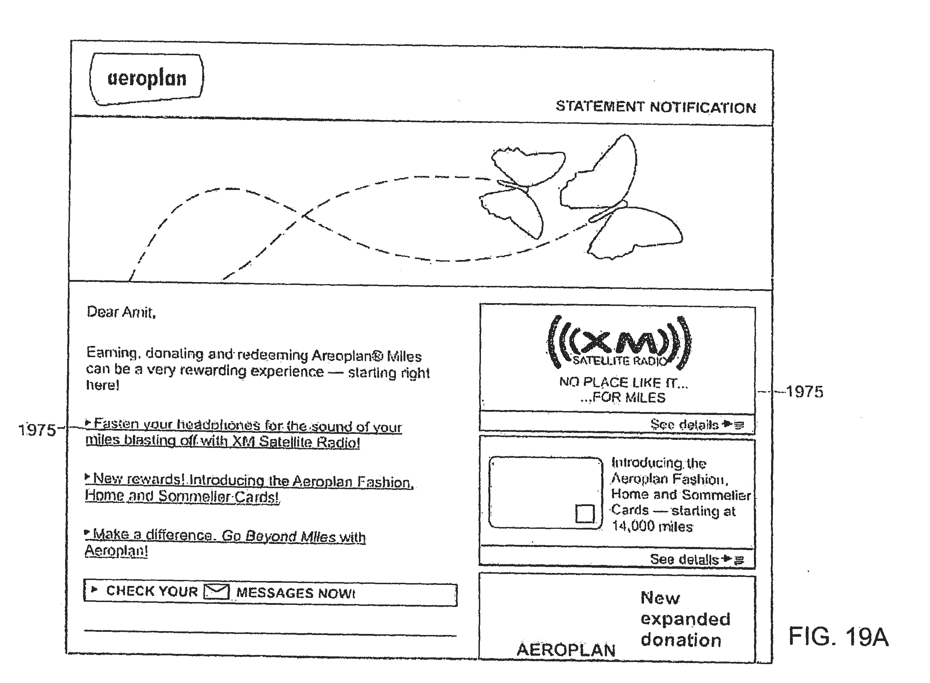

The recommendation system 300 of the present invention can be used in long term interest trend forecasting and analysis. The recommendation system 300 bases its recommendations in part on empirically correlated (expressions of) interests. The data can be archived on a regular basis so that changes in correlations can be tracked over time (e.g. it can track any changes in the frequency with which interests A and B go together). This information can be used to build analytical tools for examining and forecasting how interests change over time (including how such changes are correlated with external events). This can be employed to help online sites create, select and update content. For example, suggestive selling or cross-selling opportunities 1870, as illustrated in FIG. 18, may be created by analyzing the terms of a consumer search. Reward programs 1975, such as consumer points programs, may be suggested based on user interest, as illustrated in FIG. 19A.

The recommendation system 300 of the present invention can be used to improve search marketing capability. Online marketers earn revenue in many cases on a 'pay-per-click' (PPC) basis; i.e. they earn a certain amount every time a link, such as an online advertisement, is selected ('clicked') by a user. The value of the 'click' is determined by the value of the link that is selected. This value is determined by the value of the keyword that is associated with the ad. Accordingly, it is of value for an online marketer to have ads generated on the basis of the most valuable keywords available. The recommendation system 300 can analyze keywords to determine which are the most valuable to use in order to call up an ad. This can provide substantial revenue increase for online marketers.

The recommendation system 300 of the present invention can be used to eliminate the "Null result." Usually, traditional search technologies return results based on finding an exact word match with an entered term. Often, an e-commerce database will not contain anything that is described by the exact word entered even if it contains an item that is relevant to the search. In such cases, the search engine will typically return a 'no results found' message, and leave the user with nothing to click on. The present recommendation system 300 can find relations between words that are not based on exact, syntactic match. Hence, the present recommendation system 300 can eliminate the 'no results' message and always provide relevant suggestions for the user to purchase, explore, or compare.

The recommendation system 300 of the present invention can be used to expand general online searches. It is often in the interest of online companies to provide users with a wide array of possible links to click. Traditional search engines often provide a very meager set of results. The recommendation system 300 of the present invention will in general provide a large array of relevant suggestions that will provide an appealing array of choice to online users.

The recommendation system 300 of the present invention can be used in connection with domain marketing tools. It is very important for online domains (web addresses) to accurately and effectively direct traffic to their sites. This is usually done by selecting keywords that, if entered in an online search engine, will deliver a link to a particular site. The recommendation system 300 of the present invention will be able to analyze keywords and suggest which are most relevant and cost effective.

The recommendation system 300 of the present invention can be used in connection with gift-card and poetry generation. The recommendation system 300 of the present invention can link ideas and concepts together in creative, unexpected ways. This can be used to allow users to create specialized gift cards featuring uniquely generated poems.

Ad Server System

As discussed above, the recommendation system 300 (i.e. IAE composed of the ICA 305 and CSO 310) can be used to provide targeted online ad generation. The IAE 300 can be used to analyze documents to determine which interests are most statistically relevant. Such documents can be personal profiles, descriptions of destinations or content in an advertisement. This allows the system 300 to be used to provide targeted online advertising.

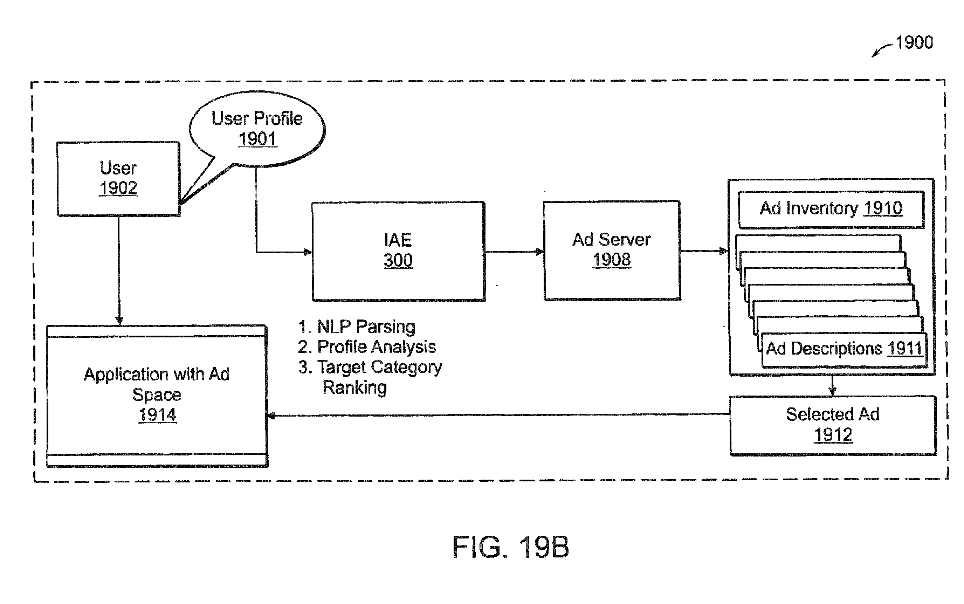

FIG. 19B is a block diagram depicting an ad server system 1900 according to an embodiment of the present invention. The user 1902 represents the individual social network user who is visiting a page within a social network (such as a Facebook social networking site). The user's profile 1901 represents the profile data that the user 1902 has provided as part of the user's involvement on the social network (this can be garnered from their explicit profile - as exists in Facebook for example - or various expressions of their interests which they may have made throughout their use of a social network - the posts the individual makes to a forum or blog for example). The user's profile 1901 data includes age, gender, location and interests (e.g., music listened to, movies enjoyed, sports played, personality traits, etc.). The page with ad space 1914 represents the page in the social network that the individual user 1902 visits to which the system 1900 serves its ads. The ad inventory 1910 provides the ads that are entered into the ad server 1908 and queued to be targeted by the IAE 300. The selected ad 1912 is the ad that most closely matches the profile of the user 1901. If there are no ads that match the user's profile 1901 closely enough, a random ad can be served.

In general, the IAE 300 can analyze an online user's personal profile as well as the content or descriptions of ads in the ad inventory 1910. The system 1900 can then determine which ad or ads 1911 are most likely to be of interest to the creator 1902 of the profile 1901 and ensure that only those ads appear on the user's profile page 1901. The IAE 300 works with the ad server 1908 to determine which ads 1911 in the inventory 1910 are suitable for the user 1902 based on the user's profile 1901. The selected ad 1912 is presented to the user 1902 on, for example, the user's profile page 1901. In this way, the system 1900 can ensure that the ads presented to the user 1902 are highly targeted and relevant.

By way of analogy, the IAE 300 treats each ad description 1911 as a "profile" and determines which of these "profiles" is closest to the online profile 1901 of the user 1902. This similarity ranking is determined by using the IAE 300 technology, which employs millions of online records of human interests. The ad server 1908 can be any ad serving product.

The ad system 1900 enables advertisers to create and manage online advertising campaigns in which they personally attach descriptions to each of the ads in their inventory, thereby generating a profile (ad description) 1911 for each ad, which is then compared to the users' profiles 1901 in the target online environment.

As discussed above in connection with the ICA 305, the ICA 300 treats individual keywords as nodes in a large, interconnected system where the weights between nodes correspond to the strength of the statistical relation between the words. As a result, the system 300 not only works when a single keyword is entered but also when multiple keywords are entered together; it can create a statistical sum of the entered keywords. This allows for more accurate profiling. For example, someone who is interested in '4x4ing' and 'hunting' is very different that someone who is interested in '4x4ing' and 'extreme sports'; the nodal method in IAE analysis is able to determine this difference. So, '4x4, hunting' returns 'shooting, guns, rodeos, country boy, mudding' while '4x4, extreme sports' returns 'snowmobiling, mudding, jeeps, dirtbiking, jet skiing.'

This use of the IAE 300 applies to ad serving as well. Ad targeting is accomplished by applying the IAE analysis to either or both of the ad profile and user profile. Although exact keyword matches are relevant, the system 300 expands the stated interests in either profile to create more opportunities to target an individual. In this way, someone interested in, for example, '4x4, extreme sports' would be served the snowmobile ad, while the '4x4, hunting' individual be served a rodeo ad. Thus, no exact keyword match is required, which is a great strength of the system. It should also be noted that ads can be selected using the IAE analysis in response to a search string at a search engine, for example.

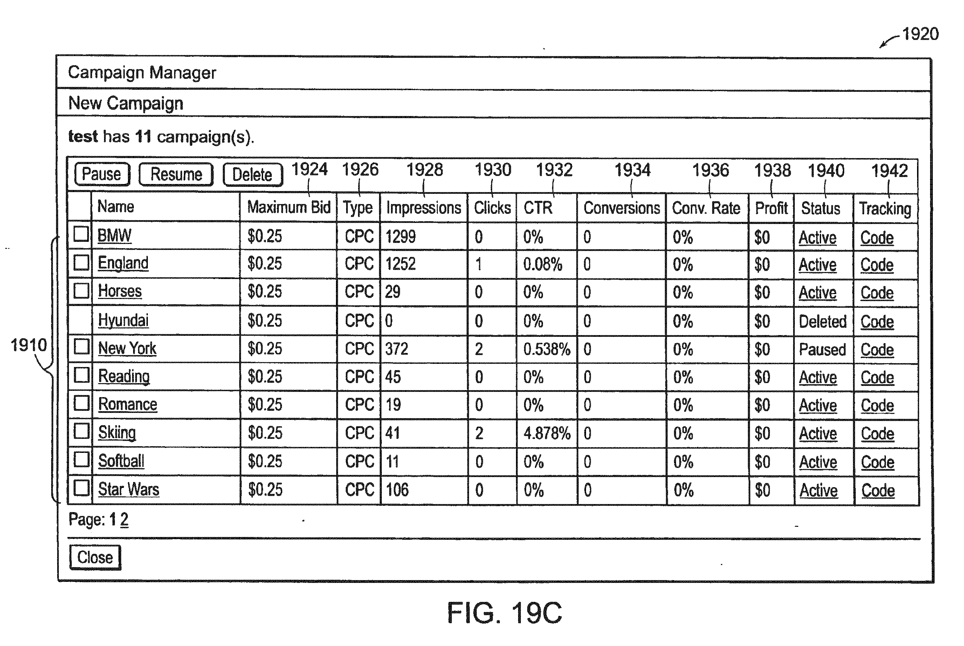

FIG. 19C is a screenshot of an example interface of an ad campaign manager 1920 according to an embodiment of the invention. The ad campaign manager 1920 shows the ad inventory 1910 to be served to web sites and social network applications - where a user's profile information 1901 can be accessed and analyzed by the system 1900. Maximum bid 1924 is the amount the advertiser is willing to spend per click on the ad (for CPC designated ads - cost per click) or per 1000 ad impressions (for CPM ads - cost per mille or cost per thousand). Type 1926 indicates the cost model for the ad (e.g., CPC or CPM). Impressions 1928 indicates the number of times the ad is displayed on the websites or applications serving the ad. Clicks 1930 indicates the number of times the ad has been clicked on by a visitor. CTR (Click-through rate) 1932 is the calculated as clicks/impressions *100%. Conversions 1934, conv. rate (conversion rate) 1936 and profit 1938 are figures that measure how many ad impressions actually lead to a profitable outcome for the advertiser (e.g., purchasing a product). Status 1940 indicates whether ads are being displayed or not (active or paused). Tracking 1942 provides a link to the code that the advertisers can place on their websites to track conversions.

Online Dating

As discussed above, the profile matching capability of the recommendation system (IAE) 300 can be used to facilitate online dating. For example, it can be used to create a novel form of mate-matching for such venues as online dating services. Most simply, it can process and analyze profiles of people who have online dating accounts and rank them for similarity.

In another interesting implementation, if the ICA component of the IAE is able to gain access to profiles of people who are in a romantic relationship, then it will be able to analyze the profiles of matched couples to determine which kinds of profiles typically match up romantically. It could then make sophisticated mate recommendations on that basis.

User Interface Implementations

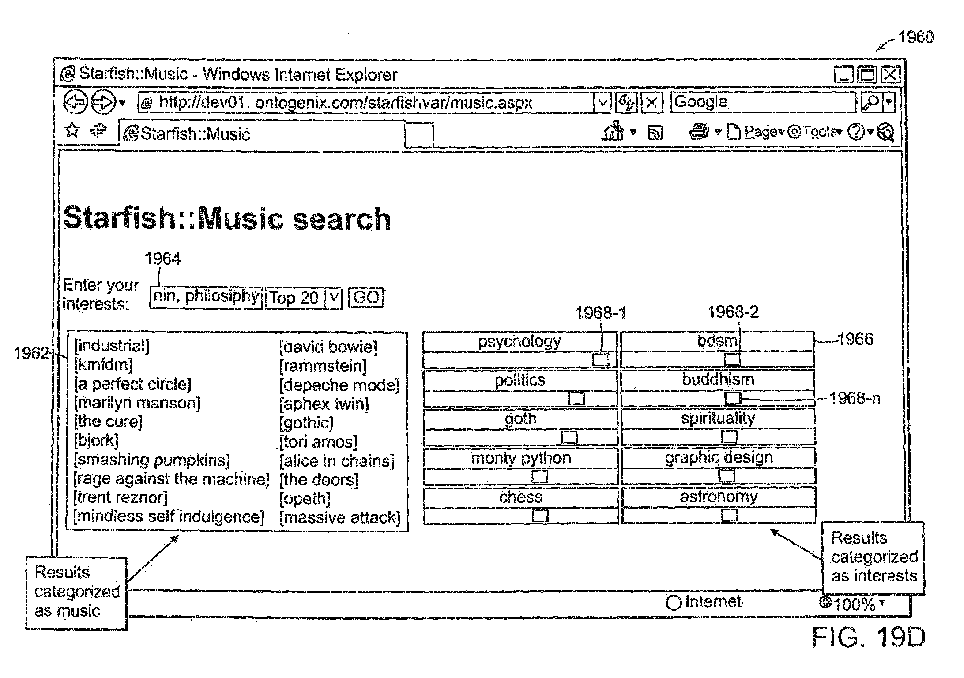

Towards creating an effective user interface for refining the results provided by the IAE 300, the IAE 300 is able to output results by category. In practice, this means that if a user enters several interests into the IAE 300, as shown in FIG. 19D, the results output 1962 can be restricted to a type - for instance, music related output 1962 or even output categorized as other interests 1966. This ability enables a diverse set of applications and user interface options.

In this example, all results 1962, 1966 are based on the user input "nin, philosophy" 1964 (where nin = nine inch nails). The results categorized as music 1964 can be linked to actual products in a retail application of this example. For example, in one embodiment of the invention, the results can link to the products for retail sale. The results categorized as interests 1966 each have an associated slider bar 1968. The initial position of the slider bar 1968-1, 1968-2, ... 1968-n represents the degree of the relevancy score. The slider bars 1968-1, 1968-2, ... 1968-n can be adjusted by the user to refine his/her profile. Once a slider bar is adjusted, the newly set strength of that term will be used to recalculate and re-display the music categorized results. It should be noted that the slider bars are just an example implementation, and any interface tool could be used to tune the results.

In this implementation, the results 1962, 1966 are actually returned in two calls to the system. First, the input "nin, philosophy" is used to get the interest categorized results set 1966. The interest categorized result set 1966 and their respective normalized relevancy weights (as indicated by the slider bar position 1968-1, 1968-2, ... 1968-n) along with the initial search terms 1964, each given a normalized weight of 1, are then used as a second call to the system to produce the music categorized result set 1962. In this way, the slider bars 1968-1, 1968-2, ... 1968-n are able to affect the music categorized results 1962.

With the ad system 1900, advertisers can target ads to online users based on their profiles (e.g. in a social networking environment). The ad system 1900 software thus determines which ad from a stock of ads is best suited to a given profile and delivers that ad.

Processing Environment

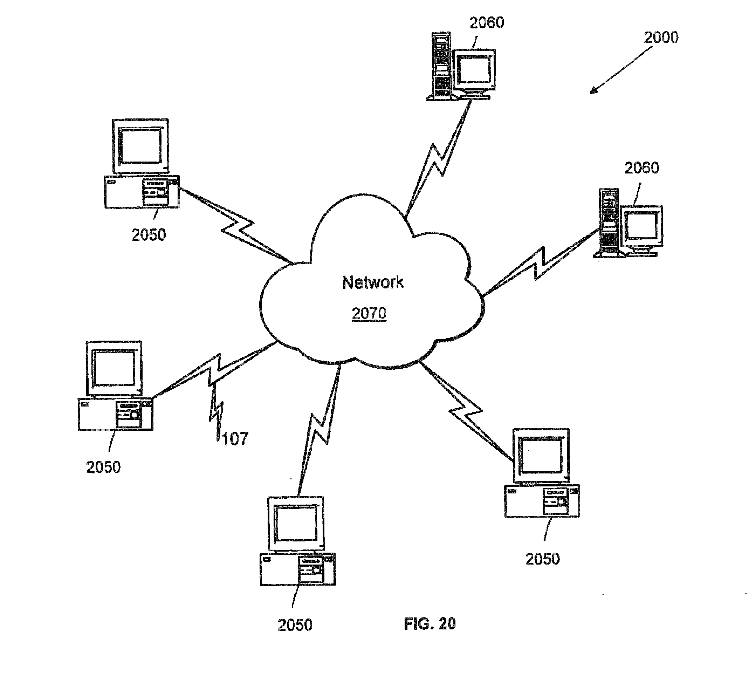

FIG. 20 illustrates a computer network or similar digital processing environment 2000 in which the present invention may be implemented. Client computed/devices 2050 and server computer(s) 2060 provide processing, storage, and input/output devices executing application programs and the like. Client computed/devices 2050 can also be linked through communications network 2070 to other computing devices, including other client devices/processes 2050 and server computer(s) 2060. Communications network 2070 can be part of a remote access network, a global network (e.g., the Internet), a worldwide collection of computers, Local area or Wide area networks, and gateways that currently use respective protocols (TCP/IP, Bluetooth, etc.) to communicate with one another. Other electronic device/computer network architectures are suitable.

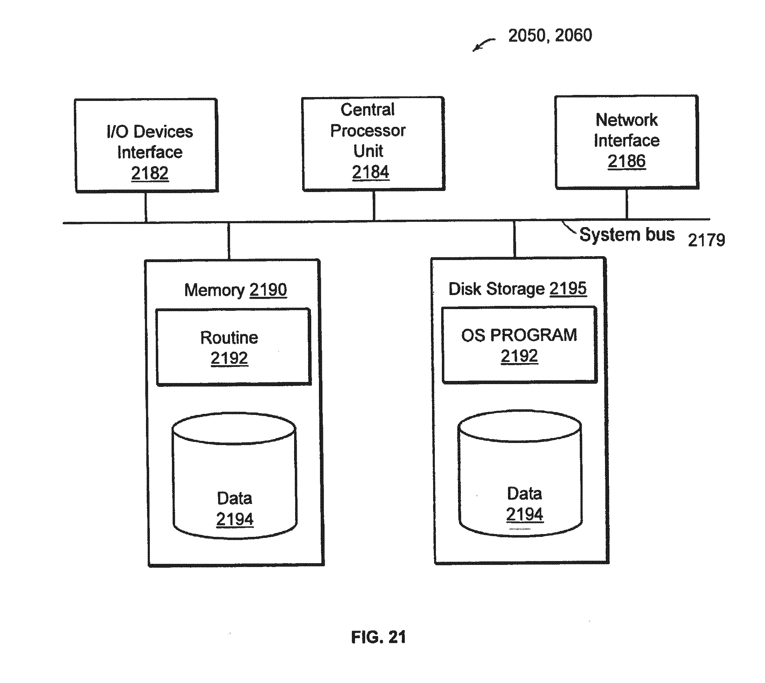

FIG. 21 is a diagram of the internal structure of a computer (e.g., client processor/device 2050 or server computers 2060) in the computer system of FIG. 20. Each computer 2050, 2060 contains system bus 2179, where a bus is a set of hardware lines used for data transfer among the components of a computer or processing system. Bus 2179 is essentially a shared conduit that connects different elements of a computer system (e.g., processor, disk storage, memory, input/output ports, network ports, etc.) that enables the transfer of information between the elements. Attached to system bus 2179 is an Input/Output (I/O) device interface 2182 for connecting various input and output devices (e.g., keyboard, mouse, displays, printers, speakers, etc.) to the computer 2050, 2060. Network interface 2186 allows the computer to connect to various other devices attached to a network (e.g., network 2070 of FIG. 20). Memory 2190 provides volatile storage for computer software instructions 2192 and data 2194 used to implement an embodiment of the present invention (e.g., object models, codec and object model library discussed above). Disk storage 2195 provides non-volatile storage for computer software instructions 2192 and data 2194 used to implement an embodiment of the present invention. Central processor unit 2184 is also attached to system bus 2179 and provides for the execution of computer instructions.

In one embodiment, the processor routines 2192 and data 2194 are a computer program product, including a computer readable medium (e.g., a removable storage medium, such as one or more DVD-ROM's, CD-ROM's, diskettes, tapes, hard drives, etc.) that provides at least a portion of the software instructions for the invention system. Computer program product can be installed by any suitable software installation procedure, as is well known in the art. In another embodiment, at least a portion of the software instructions may also be downloaded over a cable, communication and/or wireless connection. In other embodiments, the invention programs are a computer program propagated signal product embodied on a propagated signal on a propagation medium 107 (e.g., a radio wave, an infrared wave, a laser wave, a sound wave, or an electrical wave propagated over a global network, such as the Internet, or other network(s)). Such carrier medium or signals provide at least a portion of the software instructions for the present invention routines/program 2192.

In alternate embodiments, the propagated signal is an analog carrier wave or digital signal carried on the propagated medium. For example, the propagated signal may be a digitized signal propagated over a global network (e.g., the Internet), a telecommunications network, or other network. In one embodiment, the propagated signal is a signal that is transmitted over the propagation medium over a period of time, such as the instructions for a software application sent in packets over a network over a period of milliseconds, seconds, minutes, or longer. In another embodiment, the computer readable medium of computer program product is a propagation medium that the computer system may receive and read, such as by receiving the propagation medium and identifying a propagated signal embodied in the propagation medium, as described above for computer program propagated signal product.

Generally speaking, the term "carrier medium" or transient carrier encompasses the foregoing transient signals, propagated signals, propagated medium, storage medium and the like.

While this invention has been particularly shown and described with references to preferred embodiments thereof, it will be understood by those skilled in the art that various changes in form and details may be made therein without departing from the scope of the invention encompassed by the appended claims.

For example, the present invention may be implemented in a variety of computer architectures. The computer network of FIGS. 20-21 are for purposes of illustration and not limitation of the present invention.

The invention can take the form of an entirely hardware embodiment, an entirely software embodiment or an embodiment containing both hardware and software elements. In one preferred embodiment, the invention is implemented in software, which includes but is not limited to firmware, resident software, microcode, etc.

Furthermore, the invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Some examples of optical disks include compact disk - read only memory (CD-ROM), compact disk - read/write (CD-R/W) and DVD.

A data processing system suitable for storing and/or executing program code will include at least one processor coupled directly or indirectly to memory elements through a system bus. The memory elements can include local memory employed during actual execution of the program code, bulk storage, and cache memories, which provide temporary storage of at least some program code in order to reduce the number of times code are retrieved from bulk storage during execution.

Input/output or I/O devices (including but not limited to keyboards, displays, pointing devices, etc.) can be coupled to the system either directly or through intervening I/O controllers.

Network adapters may also be coupled to the system to enable the data processing system to become coupled to other data processing systems or remote printers or storage devices through intervening private or public networks. Modems, cable modem and Ethernet cards are just a few of the currently available types of network adapters.

## Claims

1. A computer implemented method of providing a search result in a recommendation system (300), the computer implemented method comprising:

   processing in an interest correlation analysis engine (305) of the recommendation system a plurality of user profiles to identify co-occurring keywords that commonly appear together in a user profile, wherein identifying keywords that commonly occur in the user profiles further includes weighing the importance of an identified keyword to a subject user profile by using a term frequency-inverse document frequency (idf) weighting calculation to determine the value of the identified keyword as an indication of user interest, including determining whether the identified keyword is a super node; wherein a super node is a classifier that is identified by determining the overall frequency of its occurrence in the corpus of user profiles;

receiving from a search engine a search query including at least one search term; and

the recommendation system (300) configured to expand the search query with additional search terms related to the search query, where the additional search terms are determined using one or more of the identified co-occurring keywords; and

providing a search result.

2. A computer implemented method as in Claim 1 each user profile is associated with a user of a social network; and processing a plurality of user social networking profiles to identify co-occurring keywords further includes computing the frequency with which a keyword appears in conjunction with another keyword in one or more of the plurality of user profiles.

3. A computer implemented method as in Claim 2 wherein computing the frequency with which a keyword appears in conjunction with another keyword in one or more of the plurality of user profiles further includes:

   computing the degree to which the two keywords tend to occur together;
   determining a ratio indicating the frequency with which the two keywords appear together; and
   determining a correlation index indicating the likelihood that users interested in one of the keywords will be interested in the other keyword, as compared to an average user profile.

4. A computer implemented method as in Claim 3 wherein processing a plurality of user social networking profiles to identify co-occurring keywords further includes:

   processing the computed degree, the determined ratio and the correlation index to determine a percentage of co-occurrence for each of the keywords; and
   determining, using the percentage of co-occurrence, a correlation ratio indicating how often a co-occurring keyword is present when another co-occurring keyword is present.

5. A computer implemented method as in Claim 1 wherein the search query is a request for one of the following: a gift recommendation, a trip recommendation, a trend forecast, music recommendation, a movie recommendation, a book recommendation, a companion recommendation, a keyword associated with internet domains, or a keyword to be used for generating online links.

6. A computer implemented method as in Claim 1 further including selecting an ad from an ad inventory to appear in connection with a page that a user is accessing from within a social network by:

   processing a candidate ad from the ad inventory to extract one or more keywords;
   computing the frequency with which the one or more extracted keywords from the ad appear in conjunction with a co-occurring keyword from the plurality of user profiles;
   expanding the extracted ad keywords with additional interest related terms using one or more of one or more of the co-occurring keywords identified in the plurality of user profiles;
   creating for the candidate ad an ad profile using the expanded ad related interest terms; and
   comparing the expanded ad related interest terms in the ad profile with the expanded interest terms of the user profile to determine which ad to select from the ad inventory.

7. A computer implemented method as in Claim 1 wherein expanding a search query with additional search terms related to the search query further includes:

   enabling a user using a user interface to tune the search results from the recommendation system by:

      receiving, at the recommendation system, interest input from the user;
      searching for interest-related categories of products or services to recommend to the user based on the user interest input;
      displaying the search results of the interest-related category recommendations, where each interest-related category recommendation has an associated slider bar;

enabling the user to use one of the slider bars to adjust the relevancy score of a respective interest-related category recommendation;

responding to the slider bar is adjustment by recalculating the relevancy score of that respective interest-related category recommendation; and

re-displaying the interest-related category recommendations.

8. A computer implemented method as in Claim 7 wherein the initial position of the slider bar represents the degree of the relevancy score and the relevancy score represents a normalized relevancy weight.

9. A computer implemented method as in Claim 8 wherein the slider bar is used by the user to refine the recommendations made based on a social networking user profile associated with the user.

10. A computer implemented method as in Claim 1 wherein determining that the identified keyword is not a super node if the idf value of the identified keyword is below zero; wherein an idf value of below zero indicates that the identified keyword is not an indication of user interest.

11. A computer implemented method as in Claim 1 wherein the interest correlation analysis engine uses an identified super node to narrow and profile the search query.

12. A computer implemented method as in Claim 1 wherein weighing the importance of a keyword further includes treating the identified keyword and co-occurring keywords as nodes in an interconnected system, where the weights between nodes correspond to the strength of a statistical relation between the identified keyword and the co-occurring keywords.

13. A computer apparatus for recommending products and services comprising:

means for processing user profiles to identify co-occurring keywords that commonly appear together in a user profile, where each user profile is associated with a user of a social network; wherein identifying keywords that commonly occur in the user profiles further includes weighing the importance of an identified keyword to a subject user profile by using a term frequency-inverse document frequency (idf) weighting calculation to determine the value of the identified keyword as an indication of user interest, including:
determining whether the identified keyword is a super node, wherein a super node is a classifier that is identified by determining the overall frequency of its occurrence in the corpus of user profiles; and
determining that the identified keyword is not a super node if the idf value of the identified keyword is below zero;
means for identifying which co-occurring keywords that commonly occur together in the same user profiles; and
means for expanding a search query with additional search terms related to the search query, where the additional search terms are determined using one or more of the identified co-occurring keywords.

14. A computer apparatus as in Claim 10 wherein the initial search query is a request for one of the following: a gift recommendation, a trip recommendation, a trend forecast, music, a movie, a book, a companion, a keyword associated with interne domains, or a keyword to be used for generating online links.

15. A computer system for recommending products and services comprising:

a crawler processing user profiles to extract keywords;
a handler, in communication with the crawler, receiving keywords that have been identified as commonly occurring in the same user profiles; wherein the keywords that commonly occur in the user profiles are identified by weighing the importance of an identified keyword to a subject user profile by using a term frequency-inverse document frequency (idf) weighting calculation to determine the value of the identified keyword as an indication of user interest, including:

determining whether the identified keyword is a super node, wherein a super node is a classifier that is identified by determining the overall frequency of its occurrence in the corpus of user profiles; and
determining that the identified keyword is not a super node if the idf value of the identified keyword is below zero; and

a search engine configured to receive a search query including at least one search term; and
a recommendation engine expanding the search query with additional search terms related to the search query, where the additional search terms are determined using one or more of the identified co-occurring keywords; the search engine configured to provide a search result.

Song Data — 2004 vs. 2005

FIG. 1

Sea of Possibilities

Consumer

215

205
Consumer
Male
Interested in:
Outdoors
Adventure

210

Flask

Binoculars

Boots

GPS

Duffel Bag

220

FIG. 2A

EP 2 704 080 A1

FIG. 2B

FIG. 3A

FIG. 3B

# Typical Dating Site Profile

392

http://www.DatingSiteExample....

UserName: Looking4NiceMan

Gender: Female

I am looking for an interesting and intelligent man 23-30 who knows what he wants but is gentle and understanding. I am a little shy at first but can be very fun once I get to know someone.

393

Her Keywords: funloving, warm, romantic, philosophy, long walks, mountain climbing, Tolstoy, dancing, Peter Gabriel, humor

**Click Here to send a message to:**
Looking4NiceMan

FIG. 3C

## Typical Social Networking Profile

394

> http://www.SocialNetworkingExample...
>
> **John**
>
>
> Gender: Male
> Age: 27
> Country: USA
> Single
> College Student
>
> **John's Blog**
>
> **Latest Entry:** I was thinking...[more]
> **Previous Entries**
> Here we go again... [more]
> It's not up to me...[more]
>
> 395
>
> **John's Friends**
>
> Jill – click here to see Jill's profile
> Henry – click here to see Henry's profile
> Karen – click here to see Karen's profile
>
> **John's Interests**
>
> **General:** long walks, music, good conversation
> **Sports:** football, tennis, running
> **Music:** I like most kinds, especially classic rock, rap and disco
> **Movies:** action is great, Indiana Jones, Star Wars, Speed, things like that

FIG. 3D

EP 2 704 080 A1

401    405a    415    402    420    425

| nature | | Search | | |
| --- | --- | --- | --- | --- |
| Related Term | O-Variant | R-Factor | | Correlation |
| nature | 3573 | 1 | | 86.7551 |
| ecology | 27 | 0.007556675 | | 33.46282 |
| conservation | 14 | 0.003918276 | | 28.91845 |
| healing | 14 | 0.003918276 | | 22.4922 |
| world music | 13 | 0.003638399 | | 19.44514 |
| environment | 41 | 0.01147495 | | 18.72089 |
| earth | 28 | 0.007836552 | | 18.54314 |
| forest | 25 | 0.006996921 | | 18.07406 |
| different cultures | 12 | 0.003358522 | | 17.94936 |
| wildlife | 49 | 0.01371397 | | 17.78667 |
| mystic | 8 | 0.002239015 | | 17.35105 |
| celtic music | 8 | 0.002239015 | | 15.77371 |
| forests | 21 | 0.005877414 | | 15.57149 |
| spirit | 19 | 0.00531766 | | 15.1225 |
| organic | 18 | 0.005037783 | | 14.59436 |
| trekking | 13 | 0.003638399 | | 14.45921 |
| wind | 19 | 0.00531766 | | 13.51107 |
| paganism | 18 | 0.005037783 | | 13.347 |
| reiki | 16 | 0.004478029 | | 13.21986 |
| optimism | 14 | 0.003918276 | | 13.20192 |

410    410a

# FIG. 4A

| Related Term | O-Variant | R-Factor | Correlation |
|---|---|---|---|
| canada | 64 | 1 | 118.4475 |
| nature | 64 | 1 | 86.7551 |
| mountains | 8 | 0.125 | 12.12368 |
| skiing | 9 | 0.140625 | 5.560015 |
| hiking | 12 | 0.1875 | 5.355766 |
| animals | 10 | 0.15625 | 5.231001 |
| art | 9 | 0.140625 | 5.040539 |
| reading | 15 | 0.234375 | 3.978473 |
| travel | 15 | 0.234375 | 3.903023 |
| outdoors | 13 | 0.203125 | 3.489671 |
| cooking | 9 | 0.140625 | 3.276498 |
| photography | 16 | 0.25 | 3.253738 |
| hockey | 12 | 0.1875 | 3.039307 |
| tattoos | 10 | 0.15625 | 2.915248 |
| camping | 13 | 0.203125 | 2.700466 |
| family | 11 | 0.171875 | 2.676981 |
| swimming | 12 | 0.1875 | 2.659012 |
| beer | 9 | 0.140625 | 2.636098 |
| love | 8 | 0.125 | 2.43417 |
| music | 32 | 0.5 | 1.701224 |

Search input: nature,canada

401  405b  402  410b

FIG. 4B

**Concept Classes  (O,S,A,E)**

504  508

502  506

500

| Global Property Weightings | Global Value Weightings | Global Value Vector Space | • Concept X<br>　– Property A<br>　　• Value 1<br>　　• Value 2<br>　　• Value 3<br>　　• ...<br>　　• Value n<br>　– Property B<br>　　• Value 1<br>　　• Value 2<br>　　• Value 3<br>　　• ...<br>　　• Value n<br>　– ...<br>　– Property N<br>　　• Value 1<br>　　• Value 2<br>　　• Value 3<br>　　• ...<br>　　• Value n | Concept Specific Property Weightings | Concept Specific Value Weightings |
|---|---|---|---|---|---|

| Concept Class Mappings |
|---|

| Concept Exclusion List |
|---|

FIG. 5

600a ⟋                   ⟋ 605a

## Concept search: Glue, Tape

| Word | PvOneAScore | PvOneBScore | PvTwoScore |
|------|-------------|-------------|------------|
| tape | 1.0075 | 0.840487 | 0 |
| scotch tape | 1.0075 | 0.720731 | 0 |
| glue | 1.0075 | 0.650853 | 0 |
| epoxy resin | 1.0075 | 0.632926 | 0 |
| masking tape | 0.9525 | 0.652439 | 0 |
| screw | 0.77 | 0.513414 | 0 |
| pin | 0.77 | 0.481341 | 0 |
| rivet | 0.77 | 0.468292 | 0 |
| putty | 0.7625 | 0.530487 | 0 |
| wax | 0.7025 | 0.521951 | 0 |
| mortar | 0.6975 | 0.479268 | 0 |
| cable | 0.68 | 0.394756 | 0 |
| clamp | 0.67 | 0.404878 | 0 |
| bolt | 0.67 | 0.387804 | 0 |
| fuse | 0.65 | 0.435609 | 0 |
| pipe | 0.65 | 0.364634 | 0 |
| cement | 0.6475 | 0.45939 | 0 |
| pulley | 0.64 | 0.381707 | 0 |
| rope | 0.63 | 0.448414 | 0 |
| extension ladder | 0.63 | 0.357317 | 0 |
| safety pin | 0.62 | 0.463048 | 0 |
| staple | 0.62 | 0.454512 | 0 |
| nail | 0.62 | 0.395975 | 0 |
| plaster | 0.6025 | 0.549634 | 0 |

610            615            620            625

## FIG. 6A

Google™

Sets

600b

### Predicted Items

Tape

Glue

Scissors

Construction Paper

Markers

Cardboard

Crayons

String

Paint

Ruler

Pencils

Tissue paper

Paper

## FIG. 6B

600c

605c

## Concept search: Glue, Tape

610  615  620  625

| Word | PvOneAScore | PvOneBScore | PvTwoScore |
|------|-------------|-------------|------------|
| screw | 0.980769 | 0.589473 | 0 |
| glue | 0.980769 | 0.58307 | 0 |
| epoxy resin | 0.980769 | 0.570175 | 0 |
| nail | 0.980769 | 0.56307 | 0 |
| rivet | 0.980769 | 0.545175 | 0 |
| bolt | 0.980769 | 0.471491 | 0 |
| mortar | 0.980769 | 0.468421 | 0 |
| tape | 0.953846 | 0.774473 | 0 |
| scotch tape | 0.953846 | 0.682456 | 0 |
| masking tape | 0.953846 | 0.614912 | 0 |
| clamp | 0.953846 | 0.475438 | 0 |
| pulley | 0.907692 | 0.421052 | 0 |
| pin | 0.903846 | 0.573157 | 0 |
| cement | 0.903846 | 0.436578 | 0 |
| magnet | 0.903846 | 0.392982 | 0 |
| putty | 0.765384 | 0.507894 | 0 |
| plaster | 0.75 | 0.506754 | 0 |
| cable | 0.738461 | 0.430614 | 0 |
| extension ladder | 0.738461 | 0.413596 | 0 |
| tar | 0.734615 | 0.375614 | 0 |
| fuse | 0.71923 | 0.46307 | 0 |
| pipe | 0.692307 | 0.38421 | 0 |
| faucet | 0.692307 | 0.381578 | 0 |
| plywood | 0.692307 | 0.348157 | 0 |
| thread | 0.688461 | 0.451754 | 0 |

## FIG. 6C

Google™

Sets

600d

**Predicted Items**

Tape

Glue

Nail

Tack

Staple

# FIG. 6D

700

```
┌─────────────┐
│ Search terms│
│     705     │
└─────────────┘
       │
       ▼
┌─────────────┐         ┌──────────────┐
│Term Analysis│- - - - ·│  Expanded    │
│     710     │         │  WordNet     │
└─────────────┘         │     712      │
       │                └──────────────┘
    {C₁}      715
       │
       ▼
┌─────────────┐         ┌──────────────┐
│{C₁]} Combination│     │     CSO      │
│             │  ·      │     713      │
└─────────────┘         └──────────────┘
       │
       ▼
┌─────────────┐
│{C₁} Expansion│· · · ·
│             │
└─────────────┘
       │
    {C₂} 720
       │
       ▼
┌──────────────────┐    ┌──────────────┐
│Results Processing│    │  CSO-tagged  │
│(eComm Bus. Rules)│· · │  Product dB  │
│       722        │    │     724      │
└──────────────────┘    └──────────────┘
       │
       ▼                ┌──────────────┐
┌──────────────┐        │    eComm     │
│    Result    │        │  Product dB  │
│ Presentation │        │  (AMZ) 726   │
│     728      │        └──────────────┘
└──────────────┘

┌──────────────────────┐
│Refinement Parameters │
│(Keyword, BN, PVs) 730│
└──────────────────────┘
```

**FIG. 7**

39

Concept Input Form

Concept : door
805a

back to search | find related | save | delete

synonyms: 810 | portal
(Enter synonyms
separated by comma)

All Properties

| Property 815 | Value 820 | Select 825 | Description 830 |
|---|---|---|---|
| Origin | Organic Object | ☐ | *How is this object produced? What are its origins? *Organic Object: A living thing. This category does not include animate beings such as people and animals, but does include inanimated living things such as trees and flowers. *Inorganic Natural : Any object that is not living but was not made by humans, such as a rock, mountain or cloud. *Artifact: Any object made by humans, whether of organic materials such as wood, or inorganic such as stone, or synthetic. |
| | Inorganic Natural | ☐ | |
| | Artifact | ☑ | |
| | Material | ☐ | |
| | Geographic | ☐ | |
| Function | Encourage | ☐ | *What are the main uses of this object? What are its possible uses? *Make sure that you have a good reason for assigning any given use or function to the object to ensure the accuracy of this program. *If you are defining a naturally occurring object that was not made for a specific use, then put some uses that it may be used for. |
| | Rejuvinate | ☐ | |
| | Threaten | ☐ | |
| | Attract People | ☐ | |
| | Challenge | ☐ | |
| | N/A | ☐ | |

FIG. 8A

EP 2 704 080 A1

| | any/varies | ☐ | |
|---|---|---|---|
| Location Of Use | N/A | ☐ | *Where is this object generally used by people? *Mostly Indoors: Anything used inside a house, building or other edifice, which is not easily removed. This also includes things used for the actual building, so a window would be listed as indoors even though technically part of it would be facing outdoors, *Mostly Outdoors: Anything generally used outside of a building. *In/on body: These are items that are used on the body, either worn or carried in the hands, and they are not of any use when not on the body. They may, of course be removed from the body physically, but they should not generally be of use when not touching the body in some way, such as a helmet. Anything put into the body, such as food, would also fall into this category. The main action should be done by the agent to himself only, so utensils, such as forks and knives would not fall into this category because they do something to another object. A knife can cut things and a fork moves them. |
| | any/varies | ☐ | |
| | mostly indoors | ☑ | |
| | mostly outdoors | ☐ | |
| | in/on water | ☐ | |
| | in sky | ☐ | |
| | in/on body | ☐ | |
| | On Feet | ☐ | |
| | On Legs | ☐ | |
| | On Torso | ☐ | |
| | On Hands | ☐ | |
| | On Arms | ☐ | |
| | On Neck | ☐ | |
| | On Head | ☐ | |
| Fixedness | N/A | ☐ | * Is the object attached to anything? Is the object to which it is attached, itself attached to anything or is it in motion? |
| | any/varies | ☐ | |
| | not fixed | ☐ | |
| | tied/plugged in | ☐ | |
| | fixed | ☑ | |

FIG. 8B

EP 2 704 080 A1

800

## Concept Input Form

Concept : happy
805c

| | back to search | find related | save | delete |

| synonyms: 810 (Enter synonyms separated by comma) | joyous |
|---|---|

All Properties

| Property 815 | Value 820 | Select 825 | Description 830 |
|---|---|---|---|
| Noun and Suffix | Yes | ☐ | |
| Participle/ Gerund | Yes | ☐ | |
| | does verb | ☐ | |
| | object of verb | ☐ | |
| Describes | Inanimate | ☐ | |
| | Animate | ☑ | |
| | Object bearing quality | ☐ | |
| | Subject's attitude to object | ☐ | |
| | Yes | ☐ | |
| Basic Category | Yes | ☐ | |

FIG. 8C

| | | |
|---|---|---|
| Togetherness | Apart | ☐ |
| | Together | ☐ |
| | Yes | ☐ |
| Love | Yes | ☐ |
| | hatred | ☐ |
| | Dislike | ☐ |
| | Indifference | ☐ |
| | Like | ☑ |
| | Love | ☐ |
| Admiration | Contempt | ☐ |
| | Ambivalent | ☐ |
| | Respect | ☐ |
| | Admiration/ Worship | ☐ |
| | Yes | ☐ |
| Need | Yes | ☐ |
| | Repulsion | ☐ |
| | don't want | ☐ |
| | neutral | ☐ |
| | want | ☐ |

FIG. 8D

EP 2 704 080 A1

| | | |
|---|---|---|
| | neutral | ☐ |
| | want | ☐ |
| | need | ☐ |
| Happiness | Very Sad | ☐ |
| | Morose | ☐ |
| | Neutral | ☐ |
| | Happy/Funny | ☑ |
| | Blissful | ☑ |
| | Yes | ☑ |
| Sanity | Yes | ☐ |
| | Crazy | ☐ |
| | Strange | ☐ |
| | Absurd | ☐ |
| | Sane | ☐ |
| | Logical | ☐ |
| Fear | Fearless | ☐ |
| | Brave | ☐ |
| | Normal | ☐ |
| | Shy/Timid | ☐ |
| | Afraid | ☐ |

FIG. 8E

900

| Settings | | | |
|---|---|---|---|
| | | | back to search / save / save & back to search |

All Properties  915  920  925  930

| Property | Value | Coefficient reset values | Description |
|---|---|---|---|
| Origin | Artifact | 1.00 | *How is this object produced? What are it's origins? *Organic object: A living thing. This category does not include animate beings such as people and animals, but does include inanimated living things such as trees and flowers. *Inorganic Natural : Any object that is not living but was not made by humans, such as a rock, mountain or cloud. *Artifact: Any object made by humans, whether of organic materials such as wood, or inorganic such as stone, or synthetic. |
| Function | support | 2.80 | *What are the main uses of this object? What are it's possible uses? *Make sure that you have a good reason for assigning any given use or function to the object to ensure the accuracy of this program. *If you are defining a naturally occurring object that was not made for a specific use, then put some uses that it may be used for. |
| | adorn | 2.80 | |
| | restore/heal | 2.80 | |
| | Rejuvinate | 1.00 | |
| Operation | spring | 1.30 | *How is the object operated, if at all? *Static: the object does not do anything itself, although it may of course still have a function, as a table. *Manual: The object has no internal source of power but rather to perform its function it must be wielded by a person, such as a hammer. |
| Location Of Use | mostly indoors | 1.20 | *Where is this object generally used by people? *Mostly indoors: Anything used inside a house, building or other edifice, which is not easily removed. This also includes things used for the actual building, so a window would be listed as indoors even through technically part of it would be facing outdoors. *Mostly outdoors: anything generally used outside of a building. *In/on body: these are items that are used on the body, either worn or carried in the hands, and they are not of any use when not on the body. They may, of course be removed from the body physically, but they should not generally be of use when not touching the body in some way, such as a helmet. Anything put into the body, such as food, would also fall into this category. The main action should be done by the agent to himself only, so utensils, such as forks and knives would not fall into this category because they do Something to another object. A knife can cut things and a fork moves them. |
| Fixedness | not fixed | 1.00 | *Is the object attached to anything? Is the object to which it is attached, itself a attached to anything or is it in motion? |
| Phase | solid | 1.00 | *If the object has various components, some of which are solid in some of which are liquid, then select partly or |

FIG. 9

EP 2 704 080 A1

Query
1000

Get Super
Nodes
From ICA
1005

Z-Score
Normalization
1010

Iterate Through
Super Nodes
(Classifiers)
1015

Iterative
Process

CSO
Processing
1020

Add Results
to Set
1030

Multiply
Scores by
Super Node
Weight
1025

FIG. 10A

**FIG. 10B**

FIG. 11

FIG. 12A

1200

PurpleNugget.com

beta

*Interest based gift search*

Tell us about the person you are buying for:

1205

FIND The Perfect Gift

1205

*Some Quick Advice:*

Try describing a combination of interests, hobbies, personality and profession.
Be brief and use quotation marks around multi-word terms.
Click hints for some examples.

*Hints*

Powered by gifteq

About Us | Feedback

©2006 Ontogenix Inc.

49

FIG. 12B

EP 2 704 080 A1

1300

---

**Gifts.com - The easy way to find great gifts - Microsoft Internet Explorer**

File   Edit   View   Favorites   Tools   Help

← Back ▾   → ▾   ☒   ☒   ⌂   🔍 Search   ☆ Favorites   ☺   ☒ ▾   🖨   🗏 ▾   🗋 🔍 🐵

Address   http://search.gifts.com/?q=smart+creative+child&x=14&y=6   [Go]

*gifts.com* ™  The easy way to find great gifts.

Wish List
Recently Viewed
Member Sign-In

▶RECIPIENT   ▶OCCASION   ▶CATEGORY   ▶MYGIFTS   [        ] [SEARCH]

**Start a new search:**
» Start a New Search

**Sorry!**
We couldn't find any gift ideas for "**smart creative child**"
↖1215

Search again:
[                ] [SEARCH]

**SEARCH TIPS**
• Make sure your spelling is correct.
• Try searching for a more general term and refining the results.

« Gifts.com home

FIG. 13

1400

Purple Nugget :: Gift Mining - Microsoft Internet Explorer

File Edit View Favorites Tools Help

Back · · Search Favorites

Address http://www.purplenugget.com/GiftResults.aspx #top    Go    Links »

PurpleNugget.com    beta    *Interest based gift search*    outdoors adventurous man    hints    Search Again

1415

Gift Ideas for: outdoors adventurous man —1415

Explore Keywords based on your description
(click a keyword below to zero in on gift ideas)    1 - 20  21 - 40  41 - 60  All 60

1420    'adventurous'  alarm clock  army knife  ball  barbeque  baseball  baseball bat  battery  bench  bicycle  bicycle pump  binoculars  boat  boots  bow (weapon)  bowling ball  canoe  canteen  cap  car convertible  car sedan  catchers mask  dart board  duffel bag  exercise bike  frisbee  golf ball  golf club  gps  helmet  hockey stick  horse  laser  'man'  'outdoors'  playing cards  puck  rifle  rollerblade  rucksack  running shoe  saddle  sailboat  skate  skateboard  ski  snowboard  snowmoble  soccer ball  spa  sports car  surfboard  tennis ball  tennis racket  toboggan  tractor  truck  vacation  whip  whiskey flask

Try these categories    All Gift Ideas  >> dart board

DVDs
Books
Music    1425

Price Range
Any Price

FIG. 14A

EP 2 704 080 A1

outdoors adventurous man - Froogle - Microsoft Internet Explorer

File   Edit   View   Favorites   Tools   Help

Back   ▾   ▾   Search   ☆ Favorites

Address   http://froogle.google.com/froogle?q=outdoors+adventurous+man&hl=en&btnG=Search+Froogle&lmode=online   Go

My Shopping List

Web   Images   Groups   News   Froogle   Maps   more >>

**Froogle**
BETA

outdoors adventurous man        1415        Search   Advance Froogle Search
Preferences

| Results for outdoors adventurous man | Results 1 - 5 of about 5. (0.06 seconds) |
|---|---|

| Category | Price range | Seller rating | Stores |
|---|---|---|---|
| Sports & Outdoors | $ [ ] to $ [ ] [Go] | 4 stars and up | Absolute Stock Photo |
| Outdoors & Camping | | 3 stars and up | eBay |
| Tents | | 2 stars and up | Magus Books & Herbs |
| Books, Music & Video | | Has a rating | Piero Tucci |
| Books | | More >> | SHOP.COM |
| More >> | | | |

Show list view   Sort by relevance

Search for outdoors adventurous man near you    Enter your zip or city, state [Go]

1425

Italian leather field coat
$731.00

Stock Photo of
Parachuting Skydiver
$180.00

Bill Nelson-
Outdoorsman -Book
$14.95

Esquire
$8.97

FIG. 14B

FIG. 14C

EP 2 704 080 A1

**AlltheBrands.com - Microsoft Internet Explorer**

File  Edit  View  Favorites  Tools  Help

Back  •  •  Search  Favorites

Address  http://www.allthebrands.com/search.aspx?q=Gifts&mc=1

all the brands
smart shoppers *start here*

shop allthebrands
Gifts
need help?

Electronics  Computers  Toys & Hobbies  Gifts  Bath & Beauty  Sporting Goods  Automotive  Apparel  Home & Garden  Food & Nutrition  Health Supplies

Gifts
▶ Anniversary Gifts
▶ Baby Gifts
▶ Birthday Gifts
▶ Candles
▶ Candy
▶ Chocolates
▶ Christmas Gifts
▶ Cigars
▶ Collectibles
▶ Crystal Dishes
▶ Liquor
▶ Pens
▶ Specialty Gifts
▶ Wines & Champagne

Gift Ideas for: busy executive —1515

Explore **keywords** based on your description
(click a keyword below to zero in on gift ideas)

[1 - 20] [21 - 40] [41 - 60] [All 60]

1525 —

air filter  alarm clock  armchair  ascot  battery  bench  blazer  blind  blotter  blueprint  boat  briefcase  bulletin board  business card holder  *'busy'*  calculator  canoe  carpet  cellphone  cigar  clock  coffee  cologne  computer  decanter  desk  doormat  drafting board  drill  electric fan  *'executive'*  fax machine  financier  folding chair  golf ball  golf club  gps  humidor  intercom  magnet  message board  mirror  money clip  necktie  office chair  paperweight  pda  pen  pen holder  pencil  pin  pipe  poster  post-it-note  printer  rack  tractor  vacation  vacuum cleaner  wallet

**brands in category**

Brands In Category > Colognes for Men

1535 —

| | | | |
|---|---|---|---|
| Acqua Brava | ACQUA DI GIO | Aimez Moi | Allure |
| Allure Homme | Amazing | Ambro De Jacomo | Andron |
| Angel | Angel For Men | Animale | ANIMALE |
| Antaeus | ANTHRACITE | ANUCCI | Aquaman |
| Aramis | Aramis 900 | Aramis Gold | Aria Missoni |
| Armani | ASPEN | Aura | Axe |

Sponsor Links — 1530

**Handcrafted Humidors at Wholesale Prices**
Buy high quality humidors, cigar combos, cases, lighters, smoke...
www.humidorswholesaler.com

**Paperweight**
Engraving Creations offers a wide variety of custom engraved...
www.engravingcreations.com

Internet

FIG. 15

1600

**AlltheVacations.com - Microsoft Internet Explorer**

File  Edit  View  Favorites  Tools  Help

Back  •  •  ⊠  🗗  🏠  |  🔎 Search  ☆ Favorites  ❸  🖂 · 🖎  🖃 · 🗂 🕮 ⚌

Address  http://www.allthevacations.com/search.aspx?q=buddhism          ⊠  Go   Links

| United States I Europe I Canada I World | Family I Adventure I Sports I Cruises I Special Trips | Air Travel I Lodging |

1615

all the vacations

*smart travelers start here!*

buddhism                                    | Search AlltheVacations |

Place your VacationAds Platinum™ Ad here! Find out how...

**Vacation Search Results > "buddhism"**                              Sponsor Links

**Study Buddhism**
AIHT offers degree programs by distance education. Course in Buddhism is available. all self-paced.
www.aiht.edu

**Buddhist Ritual Books, Products on Sale**
Learn about Buddhism, the Dalai Lama, meditation and so much more. Visit Tibetan Spirit to see
everything we have to offer.
www.tibetanspirit.com

**Zen and Tibetan Buddhism Practices**
Meditation practices of Zen and Tibetan Buddhism. Noble truths, attachment and suffering, no-self
and other concepts of Buddhism. Theravada, Mahayana and Vajrayana Buddhism.
www.betterbuddha.com

**Online Blessings, Info on Buddhism**
Actions follow intentions, so blessings are like a map, guiding you or someone you love to a
destination. Blessings can be broad, which allows for you to create many different destinations.
www.onlineblessings.com

> I've checked them, please show me more results

Place your VacationAds Platinum™ Ad here! Find out how...

No results could be found for your query. Please try a different search

1625

Internet

**FIG. 16A**

FIG. 16B

| FIG. 16B-1 |
| FIG. 16B-2 |
| FIG. 16B-3 |

—1600

| United States | Europe | Canada | World | Family | Adventure | Sports | Cruises | Special Trips | Air Travel | Lodging | |

—1515

| buddhism | | Search AlltheVacations |

a**the**vacations

*smart travelers start here!*

World Vacations >> Southeast Asia >> Thailand Vacations

Place your VacationAds Platinum™ Ad here! Find out how...

**Vacation Search Results > "buddhism" > thailand**                    Sponsor Links

▼ **Southeast Asia**
  **Thailand Vacations**

  More Southeast Asia...

  **Bed & Breakfast**

  **Campgrounds**

  **Casinos**

  **Discount Hotels**

  **Dude Ranches**

**Visiting Thailand?**
Find cheap flights and hotel rates for Thailand from over 100 top travel sites at Kayak.com. Book direct and save.
www.kayak.com

**Save on Thailand's Resorts!**
Want to vacation at a world-class hotel and still get a terrific valve for your money? Try an all-inclusive resort, where lodging, activities, meals and more are rolled into one price. —1640
www. resortvacationstogo.com

FIG. 16B-1

Golf Resorts

Health Spas

Hostels

Hotel Chains

Hotel Reservations

Hotels

Inns

Las Vegas Hotels

Lodges

Motels

New York Hotels

Resorts

San Francisco Hotels

Ski Resorts

Tennis Resorts

Timeshares

Vacation Homes

Vacation Rentals

Villas

▼ Africa

　More Africa...

▼ Asia

　More Asia...

## Save up to 40% with Thailand Tours
Our escorted Thailand tours will save you up to 40% off the price of traveling the same itinerary on your own. Register at our easy Web site for all tour discounts and deals.
www.tourvactionstogo.com

## Discount Hotel Rates Worldwide
Find discounts on travel destinations with Best Hotels Network. View photos and maps, and book instantly. Best Hotels Network has been providing the lowest hotel rates for over 10 years.
www.besthotelsnetwork.com

> I've checked them, please show me more results

Place your VacationAds ™ Ad here! Find out how...

**Brands Matching Your Search > buddhism > thailand**          Searched 8,000 Vacations

| | |
|---|---|
| Thailand Hotels | Thailand Family Resort |
| Thailand Tour Packages | Thailand Travel Packages |
| Thailand Travel Guide | Thailand Vacation Tour   —1635 |
| Thailand Hotels, Packages & Tours | Smithonian Tour to Thailand |

**Brands in Category > thailand Vacations**

| | |
|---|---|
| Adult Adventure Tour in Thailand | Live aboard & Scuba Diving in Thailand |
| Smithonian Tour in Thailand | Thailand Family Resort |
| Thailand Hotels | Thailand Hotels, Packages & Tours |
| Thailand Tour Packages | Thailand Travel Guide |
| Thailand Travel Packages | Thailand Vacation Tour |

FIG. 16B-2

EP 2 704 080 A1

▼ **Australasia**
　　**More Australasia...**

▼ **Caribbean**
　　**More Caribbean...**

▼ **Central America**
　　**More Central America...**

▼ **Eastern Europe**
　　**More Eastern Europe...**

▼ **Middle East**
　　**More Middle East...**

▼ **North America**
　　**More North America...**

▼ **South America**
　　**More South America...**

**Western Europe**

Sponsor Links

**Travel Chess**
Folding stools, Wooden carved partitions, Antiques, Wooden boxes, Chess sets, Chess pieces, Bowls, Traveling chess, magnetic chess, solitaire, wooden games,.
www.woodengames.net

**Lights Out Candles-Travel Candles**
We carry two different sizes of travel candles, both in convenient tins. Our travel candles come in many scents: eucalyptus, espresso, chocolate martini, vanilla mint and more.
www.lightsoutcandles.com

**Buy Quality Yoga Travel Bags**
AgoyUSA offers a range of stylish yoga products such as yoga mats, yoga bags and yoga accessories. We also offer an extensive range of relaxing yoga retreats. Contact us for more details.
www.agoyusa.com

—1630

> I've checked them, please show me more results

| thailand | | Search AlltheVacations |

About Us I FAQ I Contact Us I Bookmark Us I Advertise With Us
VacationAds Client Center

©2006 AlltheVacations.com
Brand names are trademarks of their owner.

FIG. 16B-3

EP 2 704 080 A1

FIG. 17A

# Shopping Site

1700

HOME | SEARCH | YOUR OFFERS

| Chair | GO | SEARCH |

**Explore These Keywords**  armchair, coffee table, daybed, divan, garden, glass, loveseat, oriental rug, picture frame

1750

**Provence Club Recliner**
Chair $749.00
View Details

SAVE 20% MORE

At Sears Home,
this weekend
Peer Review ★★★★

| PRODUCT | PRICE | RETAILER | PURCHASE ONLINE | LOCAL RETAILER | PEER RATINGS |
|---|---|---|---|---|---|
| Marcella Chair | $449 | BRICK | YES | (3) MAP 1,2,3 | ★★★ |
| Chalmer Eames | $749 | Frank's Family Furniture | YES | (1) MAP 1 | ★★★ |
| Royale Rocker | $749 | HomeService | YES | (2) MAP 1,2 | ★★★ |
| Dule Rotary | $749 | | YES | (2) MAP 1,2 | ★★ |
| Sedona Rotary | $749 | | YES | (3) MAP 1,2,3 | ★★★★ |
| La Salle Chair | $449 | IKEA | YES | (1) MAP 1 | ★★★ |
| Provence Recliner | $749 | SEARS | YES | (2) MAP 1,2 | ★★★★ |
| Retro Table Chair | $749 | Ames | YES | (1) MAP 1 | ★★ |
| Halifax Recliner | $749 | Costco | YES | (1) MAP 1 | ★★★ |
| Malibu Slider | $749 | Queens Sq Sofa | YES | (1) MAP 1 | ★★★★ |

FIG. 17B

EP 2 704 080 A1

**1700**

## Shopping Site

**JanSport Air Technics** —1755
**Street Tech Daypack**
Other products by Jansport

★★★★★ (1 customer review)
More about this product

**Price: $125.00**

**Hot Deals**

Apple 30 GB iPod video Black (5.5 Generation)

Logitech MX Revolution Cordless Laser Mouse

JanSport Super Break Classic Backpack

—1755

FIG 17C

EP 2 704 080 A1

SHOP.AOL>CA: Product Search Results

Flowers & Gifts
Health & Wellness
Home, Decor & Office
Jewelry & Watches
Music, DVDs & Video Games
Pets
Sports & Outdoors
Tools, Garden & Hardware
Toys, Games & Educational
Travel & Accessories
See all Categories

Suggestions

Bobblin Band Bouncer

Oxford Stripe 3-Piece Cradle S...

Search Results: swing
Displaying Products in Baby, Kids & Maternity        Sort by: [Product Name - Alphabetically ▼]

Items 11 - 14 of 14                                                    Page: << 1 | 2

**Silhouette Infant Swing - Oakwood - Toys R Us Exclusive**
Oakwood - Sky blue and neutral browns make this plaid collection a natural choice for baby.

Toys "R" Us
Buy Now

Reg. $169.99

**Smart Stages 3-In-1 Rocker Swing**
The Smart Stages™ 3-In-1 Rocker Swing takes baby right into the toddler years! The swing has two speeds and five songs to soothe and entertain, as well as a toy bar with two removable toys. The seat easily removes so you can take baby around the house in the infant seat. Then as baby grows, the swing frame folds and stores away so you can use it as a toddler rocker! (with children up to 40 lbs). The swing also has easy-release seat handles, a kickstand which locks out for feeding in infant seat stage, machine washable pad, convenient open top on swing for easy access, and 3-point restraint for baby's safety.

Toys "R" Us
Buy Now

Reg. $129.99

**Swing 'N Lock Gate**
Keep your baby in safe surroundings. This swinging, locking child gate is both portable and versatile, so parents can use it just about anywhere. Comes with easy one-hand lock release so it moves from one doorway to another with ease. You can choose to mount it either by pressure or by using the swing-open option with its

AOL TopSpeed™        Window (1) ▼   Blocking Pop-ups (0) ▼   Ontog...'s Vault ▼

FIG. 18

**aeroplan**

STATEMENT NOTIFICATION

Dear Amit,

Earning, donating and redeeming Aeroplan® Miles can be a very rewarding experience — starting right here!

▸ Fasten your headphones for the sound of your miles blasting off with XM Satellite Radio!

▸ New rewards! Introducing the Aeroplan Fashion, Home and Sommelier Cards!

▸ Make a difference. Go Beyond Miles with Aeroplan!

▸ CHECK YOUR ✉ MESSAGES NOW!

(((XM)))
SATELLITE RADIO
NO PLACE LIKE IT...
...FOR MILES

See details ▸ ≡

Introducing the Aeroplan Fashion, Home and Sommelier Cards — starting at 14,000 miles

See details ▸ ≡

New expanded donation

AEROPLAN

FIG. 19A

FIG. 19B

**Campaign Manager**

**New Campaign**

**test** has **11** campaign(s).

[Pause] [Resume] [Delete]  1924  1926  1928  1930  1932  1934  1936  1938  1940  1942

| | Name | Maximum Bid | Type | Impressions | Clicks | CTR | Conversions | Conv. Rate | Profit | Status | Tracking |
|---|---|---|---|---|---|---|---|---|---|---|---|
| ☐ | BMW | $0.25 | CPC | 1299 | 0 | 0% | 0 | 0% | $0 | Active | Code |
| ☐ | England | $0.25 | CPC | 1252 | 1 | 0.08% | 0 | 0% | $0 | Active | Code |
| ☐ | Horses | $0.25 | CPC | 29 | 0 | 0% | 0 | 0% | $0 | Active | Code |
| | Hyundai | $0.25 | CPC | 0 | 0 | 0% | 0 | 0% | $0 | Deleted | Code |
| ☐ | New York | $0.25 | CPC | 372 | 2 | 0.538% | 0 | 0% | $0 | Paused | Code |
| ☐ | Reading | $0.25 | CPC | 45 | 0 | 0% | 0 | 0% | $0 | Active | Code |
| ☐ | Romance | $0.25 | CPC | 19 | 0 | 0% | 0 | 0% | $0 | Active | Code |
| ☐ | Skiing | $0.25 | CPC | 41 | 2 | 4.878% | 0 | 0% | $0 | Active | Code |
| ☐ | Softball | $0.25 | CPC | 11 | 0 | 0% | 0 | 0% | $0 | Active | Code |
| ☐ | Star Wars | $0.25 | CPC | 106 | 0 | 0% | 0 | 0% | $0 | Active | Code |

1910

Page: 1 2

[Close]

EP 2 704 080 A1

**FIG. 19C**

FIG. 19D

FIG. 20

2050, 2060

| I/O Devices Interface 2182 | Central Processor Unit 2184 | Network Interface 2186 |
|---|---|---|

System bus 2179

Memory 2190

Routine 2192

Data 2194

Disk Storage 2195

OS PROGRAM 2192

Data 2194

**FIG. 21**

Europäisches
Patentamt

European
Patent Office

Office européen
des brevets

## EUROPEAN SEARCH REPORT

Application Number

EP 13 19 4508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 560 592 B1 (REID JON D [US] ET AL) 6 May 2003 (2003-05-06) * the whole document * ----- | 1-15 | INV. G06Q30/00 |
| X | US 2005/240580 A1 (ZAMIR OREN E [US] ET AL ZAMIR OREN ELI [US] ET AL) 27 October 2005 (2005-10-27) * paragraph [0002] - paragraph [0009]; figures 7A, 10 * ----- | 1-15 | |
| X | US 2005/071328 A1 (LAWRENCE STEPHEN R [US]) 31 March 2005 (2005-03-31) * abstract; figures 7A-10 * ----- | 1-15 | |

TECHNICAL FIELDS
SEARCHED (IPC)

G06Q

The present search report has been drawn up for all claims

| Place of search | Date of completion of the search | Examiner |
|---|---|---|
| Munich | 16 January 2014 | Viets, Ana |

EPO FORM 1503 03.82 (P04C01)

## ANNEX TO THE EUROPEAN SEARCH REPORT
## ON EUROPEAN PATENT APPLICATION NO.

EP 13 19 4508

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2014

| Patent document cited in search report | | Publication date | Patent family member(s) | | Publication date |
|---|---|---|---|---|---|
| US 6560592 | B1 | 06-05-2003 | NONE | | |
| US 2005240580 | A1 | 27-10-2005 | CA | 2573672 A1 | 16-02-2006 |
| | | | CN | 101019118 A | 15-08-2007 |
| | | | EP | 1782286 A1 | 09-05-2007 |
| | | | JP | 2008507041 A | 06-03-2008 |
| | | | JP | 2011227922 A | 10-11-2011 |
| | | | KR | 20070038146 A | 09-04-2007 |
| | | | US | 2005240580 A1 | 27-10-2005 |
| | | | WO | 2006017364 A1 | 16-02-2006 |
| US 2005071328 | A1 | 31-03-2005 | BR | PI0414926 A | 07-11-2006 |
| | | | CA | 2540679 A1 | 14-04-2005 |
| | | | EP | 1673703 A1 | 28-06-2006 |
| | | | JP | 4638439 B2 | 23-02-2011 |
| | | | JP | 2007507801 A | 29-03-2007 |
| | | | US | 2005071328 A1 | 31-03-2005 |
| | | | US | 2010228715 A1 | 09-09-2010 |
| | | | US | 2012233142 A1 | 13-09-2012 |
| | | | US | 2013282713 A1 | 24-10-2013 |
| | | | WO | 2005033979 A1 | 14-04-2005 |
| | | | ZA | 200602570 A | 27-08-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11807191 B
- US 11807218 B
- US 11981648 B

**Non-patent literature cited in the description**

- **BECKER, J. ; KUROPKA, D.** Topic-based Vector Space Model. *Proceedings of BIS,* 2003
- **Y. TANG ; P. REED ; T. WAGENER.** How effective and efficient are multiobjective evolutionary algorithms at hydrologic model calibration?. *Hydrol. Earth Syst. Sci.,* 2006, vol. 10, 289-307
- **J. LI ; X. LI ; C.M. FRAYN ; P. TINO ; X. YAO.** Understanding and Predicting Dynamical Behaviours in Financial Markets: Financial Application Research in CERCIA. *10th Annual Workshop on Economic Heterogeneous Interacting Agents,* June 2005
- Evaluation of dual polarization radar for rainfall-runoff modelling: a case study in Sydney, Australia. *Sixth International Symposium on Hydrological Applications of Weather Radar,* 2004
- **JUAN LIU IBA, H.** Selecting Informative Genes Using a Multiobjective Evolutionary Algorithm. *Proceedings of the 2002 Congress on Evolutionary Computation,* 2002
- Handbook of Mathematical Functions with Formulas, Graphs, and Mathematical Tables. Dover, 1972